(19) 

**Europäisches Patentamt**
**European Patent Office**
**Office européen des brevets**

(11)  **EP 4 704 361 A1**

(12) **EUROPEAN PATENT APPLICATION**
published in accordance with Art. 153(4) EPC

(43) Date of publication:
**04.03.2026  Bulletin 2026/10**

(21) Application number: **23943045.7**

(22) Date of filing: **30.06.2023**

(51) International Patent Classification (IPC):
*H04L 9/00* (2022.01)

(52) Cooperative Patent Classification (CPC):
**H04L 9/00**

(86) International application number:
**PCT/CN2023/105423**

(87) International publication number:
**WO 2025/000554 (02.01.2025 Gazette 2025/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **WANG, Wenhui**
  **Shenzhen, Guangdong 518129 (CN)**
• **LIU, Faye**
  **Shenzhen, Guangdong 518129 (CN)**
• **WANG, Donghui**
  **Shenzhen, Guangdong 518129 (CN)**

(74) Representative: **Maiwald GmbH**
**Elisenhof**
**Elisenstraße 3**
**80335 München (DE)**

(54) **REGION-BASED MANAGEMENT METHOD AND APPARATUS FOR KEYS**

(57)    This application relates to the field of communication technologies, and **in** particular, to a domain-based key management method and an apparatus, to manage, within a communication network, a homomorphic task key, and support application of a homomorphic task to the communication network. The method includes: A first control network element obtains a first homomorphic encryption key corresponding to a first domain; the first control network element sends the first homomorphic encryption key to M first homomorphic enabling units belonging to the first domain, where M is an integer greater than or equal to 1; and the first control network element sends a first homomorphic computation key to N second homomorphic enabling units belonging to the first domain, where N is an integer greater than or equal to 1, and the first homomorphic computation key is determined based on the first homomorphic encryption key and/or a first homomorphic decryption key corresponding to the first homomorphic encryption key.

FIG. 6

EP 4 704 361 A1

**Description**

TECHNICAL FIELD

This application relates to the field of communication technologies, and in particular, to a domain-based key management method and an apparatus.

BACKGROUND

With convergence of communication, perception, and artificial intelligence, perception has emerged as an inherent capability of future communication networks, providing a large amount of data for intelligent applications. The network serves as both a data producer and provider, delivering trusted data services for various intelligent applications. Additionally, the network also acts as a network data consumer, leveraging the data-driven intelligent applications to improve network performance and operation efficiency.

In addition, with social progress and increasing awareness of data ownership, requirements on data privacy protection have become increasingly stringent. How to fully explore and realize data value and efficiently utilize communication resources and computation resources in communication networks while meeting high security and privacy requirements, and how to provide end-to-end data privacy and security protection technologies while implementing various new network capabilities (such as endogenous intelligence and ubiquitous perception) and new services (such as immersive extended reality (extended reality, XR), digital twins, meta universe, and the like) are problems to be urgently resolved.

SUMMARY

This application provides a domain-based key management method and an apparatus, to manage, in a communication network, a homomorphic task key, support application of a homomorphic task to the communication network, and provide a privacy computation capability for the communication network.

According to a first aspect, an embodiment of this application provides a domain-based key management method. The method may be performed by a first control network element, or may be performed by a component (for example, a processor, a chip, a chip system, or the like) of the first control network element. For example, the first control network element performs the method. The method includes: The first control network element obtains a first homomorphic encryption key corresponding to a first domain; the first control network element sends the first homomorphic encryption key to M first homomorphic enabling units belonging to the first domain, where M is an integer greater than or equal to 1; and the first control network element sends a first homomorphic computation key to N second homomorphic enabling units belonging to the first domain, where N is an integer greater than or equal to 1, and the first homomorphic computation key is determined based on the first homomorphic encryption key and/or a first homomorphic decryption key corresponding to the first homomorphic encryption key.

The homomorphic enabling unit (for example, a first homomorphic enabling unit or a second homomorphic enabling unit) may be a terminal device, an access network device, a core network element, an independent node, an application layer function node, or the like.

According to the foregoing method, homomorphic task and key management may be performed based on domains. Each domain corresponds to one homomorphic encryption key, and all users in each domain correspond to a same homomorphic encryption key. The homomorphic encryption key may be decoupled from a user status and a specific homomorphic task, so that a same homomorphic ciphertext of the users may be provided for homomorphic computation parties of different homomorphic tasks for homomorphic computation, to improve reusability of the homomorphic ciphertext of the users and facilitate transfer of the homomorphic ciphertext in different homomorphic tasks. In addition, a domain-level homomorphic encryption key rather than a user-level homomorphic encryption key (for example, each homomorphic encryption party corresponds to one homomorphic encryption key) can reduce a quantity of homomorphic encryption keys in a homomorphic task, to reduce derivation of homomorphic computation keys, reduce homomorphic computation complexity, and improve homomorphic computation efficiency.

In a possible design, the N second homomorphic enabling units are homomorphic computation parties participating in a first homomorphic task in the first domain; the first homomorphic computation key is determined based on K homomorphic encryption keys and/or K homomorphic decryption keys that correspond to K domains and that participate in the first homomorphic task, participants of the first homomorphic task are distributed in the K domains, the K domains include the first domain, the K homomorphic encryption keys include the first homomorphic encryption key, the K homomorphic decryption keys include the first homomorphic decryption key, and K is an integer greater than or equal to 1.

In the foregoing design, when the participants of the first homomorphic task are distributed in the K domains, the first homomorphic computation key may be determined based on the K homomorphic encryption keys and/or the K homomorphic decryption keys corresponding to the K domains, so that the first homomorphic computation key may adapt to homomorphic encryption keys and/or homomorphic decryption keys of the K domains, and computation of encrypted ciphertexts from the K domains are supported.

In a possible design, the K domains are obtained by partitioning based on network architecture layers and/or service type slices. The first domain is used as an example. The first domain may correspond to a core network, an access network, or an application layer; the first domain corresponds to a data network, a cloud server, a cloud server cluster, or an application at an application layer; the first domain corresponds to an access network set, where the access network set includes P access network nodes or cells, and P is an integer greater than or equal to 1; the first domain corresponds to a public land mobile network (public land mobile network, PLMN) of a core network, or one or more network elements in a PLMN of a core network; or the first domain corresponds to a network slice, a network slice of a core network, or a network slice of an application layer.

In the foregoing design, different domain division manners are provided, to meet different requirements on domain-based key management.

In a possible design, that the first control network element obtains the first homomorphic encryption key corresponding to the first domain includes: The first control network element derives the first homomorphic encryption key and the first homomorphic decryption key corresponding to the first domain. In the design, the control network element derives the keys, and no excessive exchange is needed during key derivation, so that communication overheads can be reduced.

In a possible design, the first control network element obtains, from a key management party, the first homomorphic encryption key and the first homomorphic decryption key corresponding to the first domain. The key management party is, for example, a key management center (key management center, KMC). In the design, the key management party may obtain information about a homomorphic encryption key and a homomorphic decryption key (or a parameter related to key derivation) of a domain corresponding to each control network element, so that the key management party can quickly derive homomorphic computation keys applicable to a plurality of domains in the homomorphic task.

In the foregoing two designs, different key derivation mechanisms are supported. The homomorphic encryption key and the homomorphic decryption key may be derived by the control network element or the key management party, so that different key management requirements can be met. The key management party derives the keys.

In a possible design, before the first control network element obtains, from the key management party, the first homomorphic encryption key and the first homomorphic decryption key corresponding to the first domain, the method further includes: The first control network element determines to establish a secure channel to the key management party.

In the foregoing design, before the control network element exchanges a key with the key management party, the control network element and the key management party perform mutual authentication, and establish the secure channel, to help avoid key leakage and improve security.

In a possible design, before the first control network element sends the first homomorphic computation key to the N second homomorphic enabling units belonging to the first domain, the method further includes: The first control network element receives a first homomorphic task request, where the first homomorphic task request is used for requesting (or indicating) to configure the first homomorphic task; and the first control network element sends task configuration information to Q third homomorphic enabling units participating in the first homomorphic task in the first domain, where the task configuration information includes homomorphic task roles of the Q third homomorphic enabling units, the Q third homomorphic enabling units include the N second homomorphic enabling units, the N second homomorphic enabling units are the homomorphic computation parties participating in the first homomorphic task in the first domain, and Q is an integer greater than or equal to N.

Alternatively, before the first control network element sends the first homomorphic computation key to the N second homomorphic enabling units belonging to the first domain, the method further includes: The first control network element receives a first homomorphic task sub-requirement, where the first homomorphic task sub-requirement requests (indicates) to configure the first homomorphic task in the first domain; and the first control network element sends task configuration information to Q third homomorphic enabling units participating in the first homomorphic task in the first domain, where the task configuration information includes homomorphic task roles of the Q third homomorphic enabling units, the Q third homomorphic enabling units include the N second homomorphic enabling units, the N second homomorphic enabling units are the homomorphic computation parties participating in the first homomorphic task in the first domain, and Q is an integer greater than or equal to N.

In the foregoing design, the homomorphic task can be managed based on domains. The control network element corresponding to each domain may manage the homomorphic task on the homomorphic enabling unit in the domain corresponding to the control network element. Load of the control network element can be reduced through domain-based management, and management efficiency can be improved.

In a possible design, the participants of the first homomorphic task are distributed in the K domains, the K domains include the first domain, and K is an integer greater than 1; and the method further includes: The first control network element separately sends a first homomorphic task sub-requirement to (K-1) control network elements corresponding to (K-1) domains other than the first domain in the K domains, where the first homomorphic task sub-requirement requests (indicates) to configure the first homomorphic task in the (K-1) domains.

In the foregoing design, if the participants of the homomorphic task are related to a plurality of domains, the homomorphic task request may be split into a plurality of homomorphic task sub-requirements based on the domains, and the homomorphic task sub-requirements are forwarded across domains by using a control network element in each domain, to support implementation of a cross-domain homomorphic task.

In a possible design, the method further includes: The first control network element sends a key parameter of the first domain to the key management party, where the key parameter is determined based on the first homomorphic encryption key and/or the first homomorphic decryption key corresponding to the first domain; and the first control network element receives the first homomorphic computation key from the key management party.

In the foregoing design, the key management party may derive the homomorphic computation key based on key parameters of K domains participating in the homomorphic task, to enable the homomorphic computation key to adapt to the homomorphic encryption keys of the K domains participating in the homomorphic task, and support the implementation of the cross-domain homomorphic task.

In a possible design, before the first control network element sends the task configuration information to the Q third homomorphic enabling units participating in the first homomorphic task in the first domain, the method further includes: The first control network element determines, based on the first homomorphic task request, and homomorphic capability information of L fourth homomorphic enabling units belonging to the first domain, the homomorphic task roles of the Q third homomorphic enabling units participating in the first homomorphic task in the first domain, where the L fourth homomorphic enabling units include the Q third homomorphic enabling units, and L is an integer greater than or equal to Q.

The homomorphic capability information of the homomorphic enabling unit may include one or more of an identifier, a type, a homomorphic encryption capability level, a homomorphic encryption security level, a homomorphic encryption enabling identifier, a homomorphic decryption enabling identifier, a homomorphic computation enabling identifier, an identifier of a supported homomorphic encryption algorithm, an identifier of a supported homomorphic computation algorithm, and the like of the homomorphic enabling unit. The homomorphic task request may include one or more of a homomorphic task output type, a homomorphic task type, a homomorphic task quality requirement, a data user parameter, a quantity of data users, a quantity of data providers, a data provider parameter, and the like.

According to the foregoing design, the control network element may select a homomorphic enabling unit based on the homomorphic capability information of each homomorphic enabling unit and a homomorphic task requirement carried in the homomorphic task request, to help improve reliability of the homomorphic task.

In a possible design, the method further includes: The first control network element obtains homomorphic capability information of any one of the L fourth homomorphic enabling units; and the first control network element generates, based on the homomorphic capability information of the fourth homomorphic enabling unit, a homomorphic capability profile of the fourth homomorphic enabling unit.

The first control network element may obtain the homomorphic capability information of the homomorphic enabling unit in a manner of actively reporting by the homomorphic enabling unit (for example, the fourth homomorphic enabling unit), or in a manner of sending a reporting request to the homomorphic enabling unit to request reporting by the homomorphic enabling unit. According to the foregoing design, the homomorphic capability information of the homomorphic enabling unit is maintained on the first control network element side, and selection of the homomorphic enabling unit based on the homomorphic capability information of the homomorphic enabling unit is supported, to help improve reliability of the homomorphic task.

In a possible design, the method further includes: The first control network element receives F pieces of first information from F second control network elements, where the first information from any one of the F second control network elements includes homomorphic capability information of at least one homomorphic enabling unit belonging to a domain corresponding to the second control network element; and the first control network element determines, based on the first homomorphic task request and the F pieces of first information, the (K-1) domains in which the participants of the homomorphic encryption task are distributed, where F is an integer greater than or equal to 1.

In the foregoing design, the control network element may determine, based on the homomorphic capability information of the homomorphic enabling unit in each domain, and the homomorphic task requirement carried in the homomorphic task request, a domain related to the homomorphic task, to help implement accurate cross-domain scheduling of the homomorphic task.

According to a second aspect, an embodiment of this application provides a domain-based key management method. The method may be performed by a key management party, or may be performed by a component (for example, a processor, a chip, a chip system, or the like) of the key management party. For example, the key management party performs the method. The method includes: The key management party from K control network elements obtains key parameters of K domains participating in a first homomorphic task, where participants of the first homomorphic task are distributed in the K domains, the K control network elements respectively correspond to the K domains, a key parameter of any one of the K domains is determined based on a homomorphic encryption key and/or a homomorphic decryption key of the domain, and K is an integer greater than or equal to 1; the key management party determines, based on the key parameters of the K domains, a first homomorphic computation key of the first homomorphic task; and the key management party separately sends the first homomorphic computation key to the K control network elements.

In a possible design, the K domains include a first domain, the K control network elements include a first control network element corresponding to the first domain, and that the key management party obtains, from the K control network elements, the key parameters of the K domains participating in the first homomorphic task includes: The key management party receives, from the first control network element, a key parameter of the first domain, where the key parameter is determined based on a first homomorphic encryption key and/or a first homomorphic decryption key corresponding to the first domain; and that the key management party separately sends the first homomorphic computation key to the K control network elements includes: The key management party sends the first homomorphic computation key to the first control network element.

In a possible design, the K domains include the first domain, the K control network elements include the first control network element corresponding to the first domain, and the method further includes: The key management party derives the first homomorphic encryption key and the first homomorphic decryption key of the first domain; and the key management party sends the first homomorphic encryption key and the first homomorphic decryption key to the first control network element corresponding to the first domain.

In a possible design, that the key management party obtains, from the K control network elements, the key parameters of the K domains participating in the first homomorphic task includes: The key management party determines the key parameter of the first domain based on the first homomorphic encryption key and/or the first homomorphic decryption key of the first domain.

In a possible design, the K domains are obtained by partitioning based on network architecture layers and/or service type slices.

In a possible design, the first domain corresponds to a core network, an access network, or an application layer; the first domain corresponds to a data network, a cloud server, a cloud server cluster, or an application at an application layer; the first domain corresponds to an access network set, where the access network set includes P access network nodes or cells, and P is an integer greater than or equal to 1; the first domain corresponds to a PLMN of a core network, or one or more network elements in a PLMN of a core network; or the first domain corresponds to a network slice, a network slice of a core network, or a network slice of an application layer.

According to a third aspect, an embodiment of this application provides a communication apparatus. The apparatus has a function of implementing the method according to the first aspect or the second aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to the first aspect or the second aspect.

According to a fourth aspect, an embodiment of this application provides a communication apparatus. The communication apparatus includes an interface circuit and a processor, and the processor and the interface circuit are coupled to each other. The processor is configured to implement the method according to the first aspect or the second aspect by using a logic circuit or executing instructions. The interface circuit is configured to receive a signal from a communication apparatus other than the communication apparatus and transmit the signal to the processor, or send a signal from the processor to a communication apparatus other than the communication apparatus. It may be understood that, the interface circuit may be a transceiver, a transceiver machine, a radio transceiver, or an input/output interface.

Optionally, the communication apparatus may further include a memory, configured to store instructions executed by the processor, store input data required by the processor to run the instructions, or store data generated after the processor runs the instructions. The memory may be a physically independent unit, or may be coupled to the processor, or the processor includes the memory (that is, the processor and the memory are integrated).

In a possible implementation, the communication apparatus is a chip.

According to a fifth aspect, an embodiment of this application provides a domain-based key management system. The system may include the first control network element according to the first aspect and the key management party according to the second aspect.

According to a sixth aspect, an embodiment of this application provides a computer-readable storage medium. The computer-readable storage medium stores a computer program or instructions. When the computer program or the instructions are executed by a processor, the method according to the first aspect or the second aspect may be implemented.

According to a seventh aspect, an embodiment of this application further provides a computer program product, including a computer program or instructions.

When the computer program or the instructions are executed by a processor, the method according to the first aspect or the second aspect may be implemented.

According to an eighth aspect, an embodiment of this application further provides a chip system. The chip system includes a processor. The processor is configured to be coupled to a memory. The memory is configured to store a program or instructions. When the program or the instructions are executed by the processor, the method according to the first aspect or the second aspect may be implemented.

For technical effects that can be achieved in the second aspect to the eighth aspect, refer to the technical effects that can be achieved in the first aspect. Details are not described herein again.

BRIEF DESCRIPTION OF DRAWINGS

FIG. 1A, FIG. 1B, FIG. 1C, and FIG. 1D are diagrams of homomorphic encryption algorithms according to an embodiment of this application;
FIG. 2 is diagram of a homomorphic encryption scheme according to an embodiment of this application;
FIG. 3 is a diagram of a possible and non-limiting communication system architecture according to an embodiment of this application;
FIG. 4 is a diagram of performing a homomorphic task in a communication network according to an embodiment of this application;
FIG. 5 is a diagram of a structure of a homomorphic encryption control function network element according to an embodiment of this application;
FIG. 6 is a diagram of a domain-based key management method according to an embodiment of this application;
FIG. 7 is a diagram 1 of domain division according to an embodiment of this application;
FIG. 8 is a diagram 2 of domain division according to an embodiment of this application;
FIG. 9 is a diagram of a homomorphic encryption key architecture according to an embodiment of this application;
FIG. 10 is a diagram of a homomorphic task management architecture according to an embodiment of this application;
FIG. 11 is a diagram 1 of a homomorphic task management process according to an embodiment of this application;
FIG. 12 is a diagram 2 of a homomorphic task management process according to an embodiment of this application;
FIG. 13 is a diagram of a cross-domain homomorphic encryption task according to an embodiment of this application;
FIG. 14 is a diagram of a domain-based key management procedure according to an embodiment of this application;
FIG. 15 is a diagram 1 of a structure of a communication apparatus according to an embodiment of this application; and
FIG. 16 is a diagram 2 of a structure of a communication apparatus according to an embodiment of this application.

DESCRIPTION OF EMBODIMENTS

For ease of understanding by a person skilled in the art, before embodiments of this application are described, some terms in this application are first described.

Homomorphic encryption (homomorphic encryption, HE) is a technology enabling computation and processing of data ciphertext without exposing data plaintext. HE focuses on privacy protection computation and implements data value extraction while providing privacy protection. HE is built upon basic encryption by adding a homomorphic computation function to a ciphertext. The homomorphic encryption allows for direct computation on the encrypted ciphertext, and for the ciphertext-based computation result, yields a decrypted computation result that is consistent with a plaintext-based computation result. The homomorphic encryption can be classified into partially homomorphic encryption, somewhat homomorphic encryption, and fully homomorphic encryption. The partially homomorphic encryption supports only homomorphic addition or homomorphic multiplication. The somewhat homomorphic encryption allows for a limited number of arbitrary homomorphic operations, where the homomorphic operation may be homomorphic addition, homomorphic multiplication, or homomorphic computation of another arithmetic operation. The fully homomorphic encryption supports an unlimited number of homomorphic operations. The fully homomorphic encryption may be asymmetric public key encryption or symmetric encryption, provided that the ciphertext has an algebraic structure.

Homomorphic encryption HE = (HE.Keygen, HE.Enc, HE.Dec, HE.Eval) is formed by four algorithms, where HE.Keygen indicates key generation (Key generation), HE.Enc indicates homomorphic encryption (homomorphic encryption), HE.Dec indicates homomorphic decryption (homomorphic decryption), and HE.Eval indicates homomorphic evaluation (homomorphic evaluation), also referred to as homomorphic computation. The following uses an asymmetric encryption scheme as an example to describe the homomorphic encryption, where n is a security parameter.

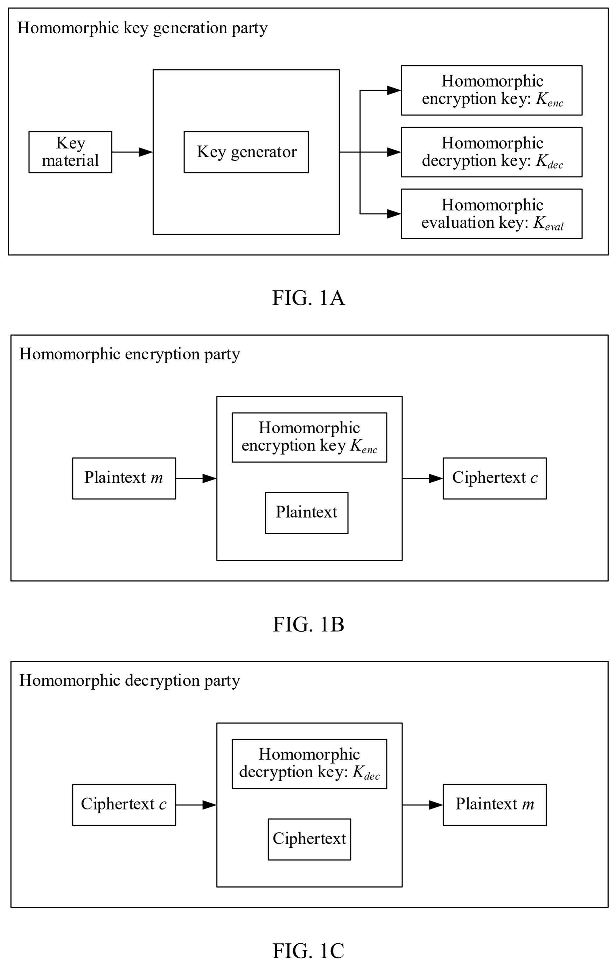

(1) Key generation: $(pk, evk, sk) \leftarrow HE.\ Keygen(1^n)$. Refer to FIG. 1A. A homomorphic key generation party (HEKG for short) may input a key material (for example, $1^n$) into a key generator, and output a public key (public key, pk) as a homomorphic encryption key: $K_{enc} = pk;$ output a key $K_{eval}$ as a homomorphic

evaluation key (evaluation key, evk), which may also be referred to as a homomorphic computation key; and output a secret key (secret key, sk) as a homomorphic decryption key.

(2) Homomorphic encryption: c ← $HE.\ Enc_{pk}$ (m). Refer to FIG. 1B. A homomorphic encryption party (HEenc for short) may use a homomorphic encryption key $K_{enc}$ = pk to encrypt a single-bit plaintext (plaintext) message $m \in \{0,1\}$ into a ciphertext (ciphertext) c.

(3) Homomorphic decryption: $m ← HE.\ Dec_{sk}(c)$. Refer to FIG. 1C. A homomorphic decryption party (HEdec for short) may use a homomorphic decryption key $K_{dec}$ = sk to decrypt a ciphertext c to restore the ciphertext to a plaintext message $m \in \{0,1\}$.

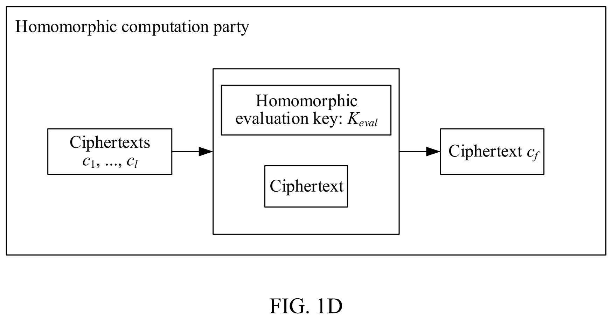

(4) Homomorphic evaluation (or homomorphic computation): $c_f ← HE.\ Eval_{evk}(f, c_1, ... , c_l)$, which may also be referred to as homomorphic computation. Refer to FIG. 1D. Based on an input ciphertext $c_1, ... , c_l$ and a homomorphic computation key $K_{eval}$ = evk, a homomorphic computation party (HEcalc, or HEeval for short) may execute a homomorphic computation function $f : \{0,1\}^l → \{0,1\}$ on the ciphertext, to obtain an output ciphertext $c_f$ of homomorphic computation.

In the formula, f represents an arithmetic circuit with addition and multiplication gates on a GF(2) (where GF represents a finite field, and GF is short for Galois field (Galois Field)). Generally, the homomorphic computation HE.Eval may be decomposed into a plurality of basic operators, for example, homomorphic addition $c_{add} ← HE.\ Add_{evk} (c_1, c_2)$ and homomorphic multiplication $c_{mult} ← HE.\ Mult_{evk}(c_1, c_2)$.

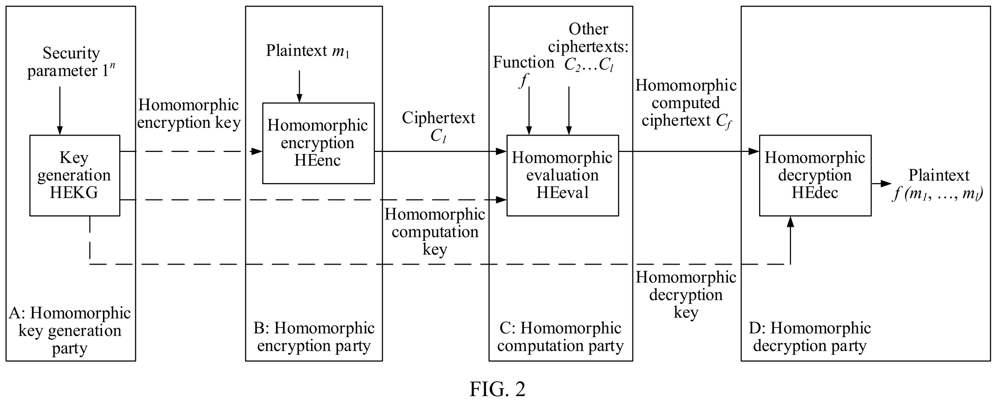

The entire homomorphic encryption scheme HE = (HE.Keygen, HE.Enc, HE.Dec, HE.Eval) is shown in FIG. 2, and after being decrypted, a ciphertext-based computation result is equivalent to a plaintext-based computation result, where $Dec_{K_{dec}}(f(Enc_{K_{enc}}(m_1),Enc_{K_{enc}}(m_2),...,Enc_{K_{enc}}(m_l)))=f(m_1, ... ,m_l)$. A homomorphic key generation party A generates a homomorphic encryption key $K_{enc}$, a homomorphic computation key $K_{eval}$, and a homomorphic decryption key $K_{dec}$, and needs to separately distribute the key to a homomorphic encryption party B, a homomorphic computation party C, and a homomorphic decryption party D.

In a homomorphic task, a plurality of homomorphic encryption parties may encrypt data from different sources, a plurality of homomorphic computation parties may execute a homomorphic computation circuit, or there is a single-hop or multi-hop homomorphic computation party. A homomorphic task may have a plurality of homomorphic decryption parties. A decryption result may be sent to a plurality of data users. Based on key deployment, the homomorphic decryption party and the data user may be the same entity or different entities. The fully homomorphic encryption may be asymmetric public key encryption or symmetric encryption, provided that the ciphertext has an algebraic structure. Homomorphic encryption keys of a plurality of homomorphic encryption parties in a homomorphic task may be the same or different. The homomorphic computation key may include a bootstrapping key (bootstrapping key, BSK) and a key switching key (key switching key, KSK). The BSK may be used by a homomorphic computation decryption circuit on a ciphertext to reduce noise. The KSK may be used for switching, after the ciphertext computation, a ciphertext product into a new ciphertext having a same dimension as an original ciphertext, and eliminate a cross item of a corresponding key, to reduce a problem of an increasing ciphertext size caused by ciphertext multiplication.

In addition, it should be noted that "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects.

In this application, "at least one" means one or more, and "a plurality of' means two or more. In descriptions of this application, terms such as "first" and "second" are merely used for a purpose of distinguishing and description, and shall not be understood as an indication or implication of relative importance or an indication or implication of an order.

The foregoing describes some terms in embodiments of this application. The following describes a communication system architecture to which embodiments of this application are applicable.

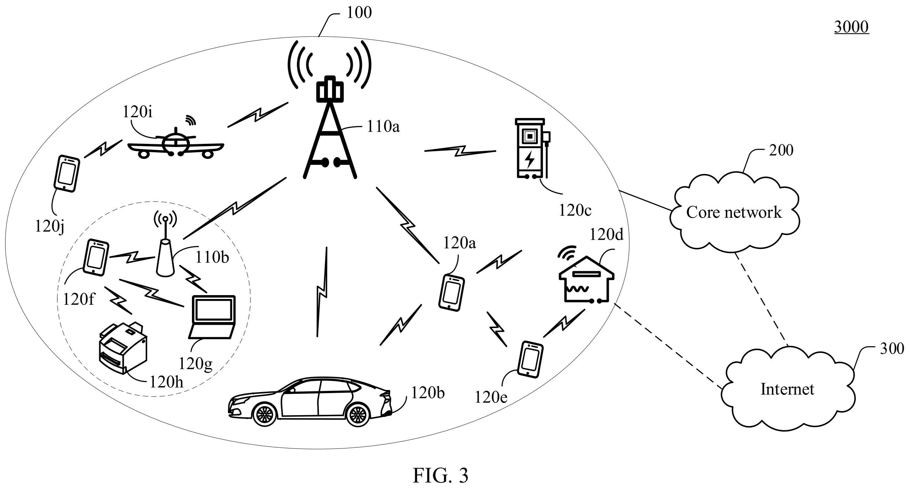

FIG. 3 shows a possible and non-limiting communication system architecture to which an embodiment of this application is applicable. As shown in FIG. 3, the communication system 3000 includes a radio access network (radio access network, RAN) 100, and a core network (core network, CN) 200. Optionally, the communication system 3000 may further include an internet 300. The RAN 100 includes at least one network device (for example, 110a and 110b in FIG. 3, collectively referred to as 110) and at least one terminal device (for example, 120a to 120j in FIG. 3, collectively referred to as 120). The RAN 100 may further include another RAN node, for example, a wireless relay device, a wireless backhaul device (not shown in FIG. 3), and/or the like. The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to a 3rd generation partnership project (3rd generation partnership project, 3GPP), for example, a 4th generation (4th generation, 4G) mobile communication system, a 5th generation (5th generation, 5G) mobile communication system, or an evolved system after 5G (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

It may be understood that, FIG. 3 shows only a possible communication system architecture to which embodiments of this application may be applicable. In another possible scenario, the communication system architecture may alternatively include another device.

The network device 110 is a node in the radio access network (radio access network, RAN), and may also be referred to as an access network device or a RAN node (or device). The network device 110 is configured to help the terminal device implement wireless access. A plurality of network devices 110 in the communication system 3000 may be nodes of a same type, or may be nodes of different types. In some scenarios, roles of the network device 110 and the terminal device 120 are relative. For example, the network element 120i in FIG. 3 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, the network elements 110a and 110b in FIG. 3 may be understood as communication apparatuses with a base station function, and the network elements 120a to 120j may be understood as communication apparatuses with a terminal device function.

In a possible scenario, the network device may be a base station (base station), an evolved base station (evolved NodeB, eNodeB), a transmission reception point (transmission reception point, TRP), a transmission point (transmission point, TP), a next-generation NodeB (next-generation NodeB, gNB), a next-generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 3), a micro base station or an indoor base station (for example, 110b in FIG. 3), a relay node or a donor node, or a radio controller in a CRAN scenario. The network device may alternatively be a device with a base station function in device to device (device to device, D2D) communication, internet of vehicles communication, unmanned aerial vehicle communication, or machine communication. Optionally, the network device may alternatively be a server, a wearable device, a vehicle, an in-vehicle device, or the like. For example, an access network device in a vehicle to everything (vehicle to everything, V2X) technology may be a road side unit (road side unit, RSU).

In another possible scenario, a plurality of network devices collaborate to assist the terminal device in implementing wireless access, and different network devices separately implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the network device may be a CU node, a DU node, or a device including a CU node and a DU node. In addition, the CU may be classified as a network device in an access network RAN, or the CU may be classified as a network device in a core network CN. This is not limited herein.

A form of the network device is not limited in embodiments of this application. An apparatus for implementing a function of a network device may be a network device, or may be an apparatus, for example, a chip system, that can enable a network device to implement the function. The apparatus may be mounted in the network device or used in conjunction with the network device.

The terminal device 120 may also be referred to as a terminal, user equipment (user equipment, UE), a mobile station (mobile station, MS), a mobile terminal (mobile terminal, MT), or the like; or is a device that provides a user with voice or data connectivity; or may be an internet of things device. For example, the terminal device includes a hand-held device, an in-vehicle device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, a pedometer, or the like), an in-vehicle device (for example, a car, a bicycle, an electric vehicle, an airplane, a ship, a train, a high-speed train, or the like), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, an electricity meter, or the like), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device with a terminal function. For example, the terminal device may alternatively be a device that has a terminal function in D2D communication.

A device form of the terminal device is not limited in embodiments of this application. An apparatus for implementing a function of a terminal device may be a terminal device, or may be an apparatus, for example, a chip system, that can enable a terminal device to implement the function. The apparatus may be mounted in the terminal device or used in conjunction with the terminal device. In embodiments of this application, the chip system may include a chip, or may include a chip and another discrete component.

Each network element or device in the communication system (which may also be referred to as a communication network) shown in FIG. 3 may have a homomorphic encryption and/or homomorphic computation capability. Therefore, in embodiments of this application, it may be considered that the homomorphic task corresponding to homomorphic encryption is supported in the communication network, to provide a privacy computation capability for the communication network.

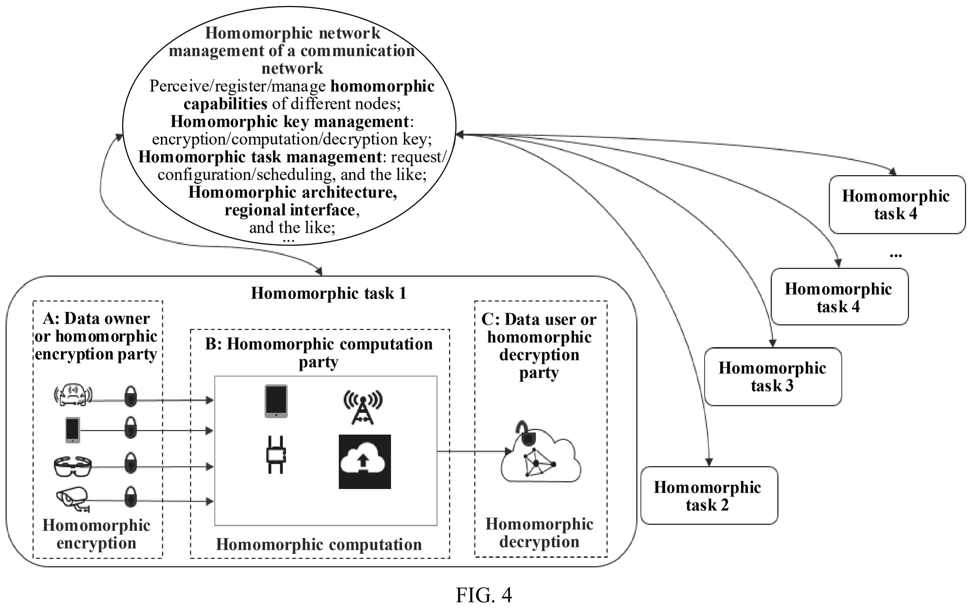

FIG. 4 is an example of performing a homomorphic task in a communication network according to this application. The communication network may also be referred to as a telecommunication network. The communication network may be deployed as cells, and each cell may have thousands of terminal devices wirelessly accessing a serving cell of the cell. In FIG. 4, a terminal device like an intelligent vehicle configured with an on-board unit (on-board unit, OBU), a smartphone, a VR/AR device, a smart camera, or the like may have a homomorphic encryption capability. When privacy protection is required, homomorphic encryption may be performed on generated sensitive data; then the data is transmitted to another terminal node, a road side unit (road side unit, RSU), a base station, a function network element (network function, NF) in a core network (the function network element in the core network is referred to as an NF for short below), a cloud provider, or the like in a communication network, and homomorphic computation on a ciphertext is performed; and finally computed ciphertext data is transmitted to a data user for homomorphic decryption.

There may be a plurality of homomorphic tasks (for example, homomorphic tasks 1 to 4 in FIG. 4) in the entire communication network. Based on the (fully) homomorphic encryption technology, the communication network may provide privacy protection and privacy computation services for a high-security and high-sensitive service. When applying the homomorphic tasks to the communication network, how to design a key architecture of the homomorphic encryption tasks and how to manage the homomorphic task keys is a question worth thinking.

Based on this, this application provides a domain-based key management scheme, to manage, in a communication network, a homomorphic task key, support application of a homomorphic task to the communication network, and provide a privacy computation capability for the communication network. The following describes in detail embodiments of this application with reference to accompanying drawings.

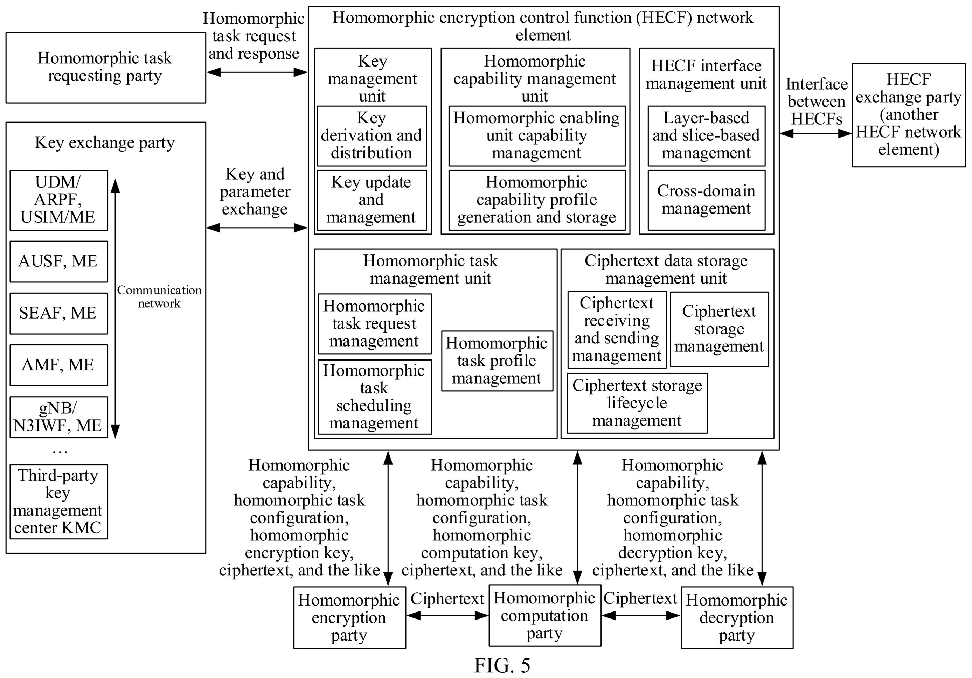

FIG. 5 is a diagram of a structure of a homomorphic encryption control function (homomorphic encryption control function, HECF) network element according to an embodiment of this application. The HECF network element may include functions of some or all of units such as a homomorphic task management unit, a homomorphic capability management unit, a key management unit, a ciphertext data storage management (ciphertext data storage management, CDSM) unit, an HECF interface management (HECF interface management, HEinterM) unit, and the like.

In some implementations, the homomorphic task may also be referred to as a homomorphic encryption task, the homomorphic task management unit may also be referred to as a homomorphic encryption task management (homomorphic encryption task management, HETM) unit, the homomorphic capability management unit may also be referred to as a homomorphic encryption capability management (homomorphic encryption capability management, HECapM) unit, and the key management unit may also be referred to as a homomorphic encryption key management (homomorphic encryption key management, HEKM) unit.

The homomorphic task management unit may have one or more of functions such as homomorphic task request management, homomorphic task scheduling management, and homomorphic task profile (profile) management. The homomorphic task request management function may be used for managing all homomorphic task requests, receiving the homomorphic task requests from a homomorphic task requesting party, parsing the homomorphic task requests, making response to the homomorphic task based on a homomorphic task scheduling management result, filtering out repeated or improper homomorphic task requests, and the like. The homomorphic task scheduling management function may be used for performing homomorphic task scheduling (or orchestration) based on a homomorphic task request parsing result and a homomorphic capability information list, delivering a homomorphic task configuration to a homomorphic encryption party, a homomorphic computation party, a homomorphic decryption party, or the like, receiving a homomorphic configuration response/task response, and the like. The homomorphic task profile management function may be used for generating a homomorphic task profile (which may be stored in a homomorphic task management unit) based on a homomorphic task request (or a homomorphic task request parsing result), a homomorphic task scheduling result, and the like; and may perform profile management like forwarding, updating, storage, destruction, and the like.

The homomorphic capability management unit may have a homomorphic enabling unit capability management function and a homomorphic capability profile (profile) management function; may receive homomorphic capability information reported by the homomorphic enabling unit (for example, a homomorphic encryption party, a homomorphic computation party, a homomorphic decryption party, or the like); and generate, store, or update, based on the homomorphic capability information, a homomorphic capability profile registered by the homomorphic enabling unit, where the homomorphic capability profile registered by the homomorphic enabling unit may be stored in the homomorphic encryption capability management unit.

The key management unit has a function of managing a homomorphic task key. For example, the key management unit may perform exchange with another key exchange party, and exchanged content may include one or more of a key material, a historical key, a public parameter used for generating a homomorphic task key, and the like. In addition, the key management unit may generate an encryption/decryption key (symmetric/asymmetric/homomorphic encryption key or symmetric/asymmetric/homomorphic decryption key) and a homomorphic computation key, and perform management on key distribution, use, update, storage, destruction, a key lifecycle, and the like.

The ciphertext data storage management unit may have one or more of functions such as ciphertext receiving and sending management, ciphertext storage lifecycle management, ciphertext storage management, and the like. The ciphertext receiving and sending management supports receiving a ciphertext from a homomorphic enabling unit or an encryption party, or sending a ciphertext to a homomorphic enabling unit or a decryption party. The ciphertext storage lifecycle management supports setting a lifecycle for each ciphertext. The ciphertext lifecycle starts from a moment when the ciphertext is received, and the ciphertext is deleted after the ciphertext lifecycle ends. The ciphertext storage management supports portioned storage for ciphertext. Specifically, ciphertext storage is partitioned based on one or more of users (for example, homomorphic enabling units) to which the ciphertext belongs, encryption keys corresponding to the ciphertext, network layers associated with the ciphertext, network slice types associated with the ciphertext, security contexts associated with the ciphertext, and the like.

In this embodiment of this application, the homomorphic enabling unit may be a terminal device, an access network device, a core network element, an independent node (independent node, IN), an application function (application function, AF) node, or the like, and may be used as a participant of a homomorphic task, for example, a homomorphic encryption party, a homomorphic computation party, or a homomorphic decryption party. The key exchange party may include a unit that stores symmetric keys or security contexts of users at all levels in a symmetric key architecture of a universal subscriber identity module (universal subscriber identity module, USIM) in a communication network, for example, a network element or an infrastructure in a communication network, for example, a unified data management (unified data management, UDM)/authentication credential repository and processing function (authentication credential repository and processing function, ARPF) network element, an authentication server function (authentication server function, AUSF) network element, a security anchor function (security anchor function, SEAF) network element, an access and mobility management function (access and mobility management function, AMF) network element, a gNB/non-3GPP interworking function (non-3GPP interworking function, N3IWF) network element, a USIM/mobile equipment (mobile equipment, ME) network element, or the like; and a third-party key management center (key management center, KMC) with an independent key architecture, and the like.

The HECF network element may be deployed in a communication network, and may be independently deployed as a function network element or a node in the communication network; or may be integrated with an existing network element or node in the communication network. For example, a network exposure function (network exposure function, NEF) network element in the communication network may have a function of the HECF network element, an access and mobility management function (access and mobility management function, AMF) network element may have a function of the HECF network element, a session management function (session management function, SMF) network element may have a function of the HECF network element, or the like. It may be understood that, one or more HECF network elements may be deployed in the communication network, or one or more network elements having a function of the HECF network element may be deployed. The HECF network element may have different names in different communication systems.

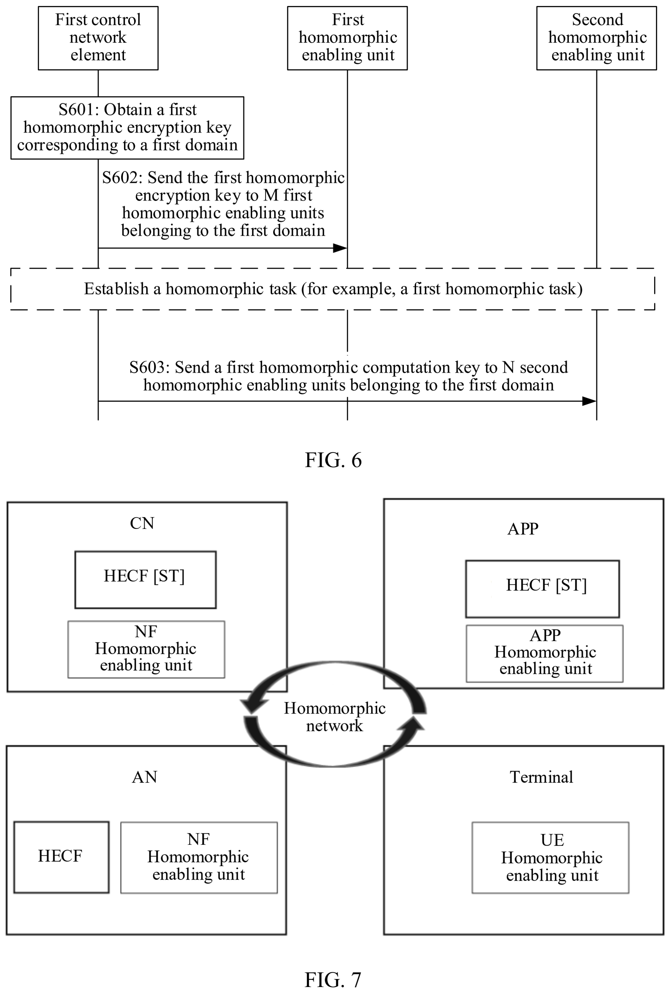

FIG. 6 is a diagram of a domain-based key management method according to an embodiment of this application. In FIG. 6, for example, a control network element performs the method. It may be understood that, the control network element may be the HECF network element, or a network element having a function of the HECF network element, or may be a component (for example, a processor, a chip, a chip system, or the like) of the network element having the function of the HECF network element, or an apparatus that matches the component, or the like.

S601: A first control network element obtains a first homomorphic encryption key corresponding to a first domain.

In this embodiment of this application, a communication network may be divided into a plurality of domains for homomorphic task management, and the domains are respectively managed by a plurality of control network elements. Each control network element may be responsible for homomorphic task management, homomorphic capability management, key management, interface (for example, HECF interface) management, ciphertext data storage management, and the like in a domain corresponding to the control network element.

In some implementations, domains may be obtained by partitioning based on network architecture layers, and/or service type (service type) slices, and the like. The service type slice, also referred to as a traffic type slice, may be a logical network that is segmented based on service types (or traffic types) or the like within operators' communication network and endowed with specific network features, that is, a network slice. Different network slices may have distinct network performance requirements, for example, network slices for ultra-reliable low-latency communications (ultra-reliable low-latency communications, uRLLC), massive machine type communication (massive machine type communication, mMTC), enhanced mobile broadband (enhance mobile broadband, eMBB), and the like.

The first domain corresponding to (or managed by) the first control network element is used as an example. The first domain may correspond to a core network, an access network, or an application layer; the first domain may correspond to a data network, a cloud server, a cloud service cluster, an application, or the like at an application layer; or the first domain may correspond to a PLMN of a core network, or one or more network elements in a PLMN of a core network; or the like.

In addition, the first domain may alternatively correspond to an access network set. The access network set may include P access network nodes or cells, where P is an integer greater than or equal to 1. The access network set may determine (or identify) the P access network nodes or cells based on one or more of a cell identifier (cell id), an access network node identifier (gNB id), an access management function-related identifier (for example, an AMF identifier (AMF id), an AMF set identifier (AMF set id), an AMF region identifier (AMF region id)), a tracking area indicator (tracking area indicator, TAI), a network slice identifier, or the like.

The first domain may alternatively correspond to a network slice, a network slice of a core network, or a network slice of an application layer. The network slice may be determined or identified by using network slice selection assistance information (network slice selection assistance information, NSSAI), a slice/service type (slice/service type, SST) identifier, or the like.

In an example, refer to a diagram of domain division shown in FIG. 7. A communication network may be divided into domains corresponding to an access network, a core network, and an application layer based on a network architecture layer of an access network (access network, AN), a core network (core network, CN), and an application (application, APP) layer, and the domains are respectively managed by different control network elements (for example, HECF network elements).

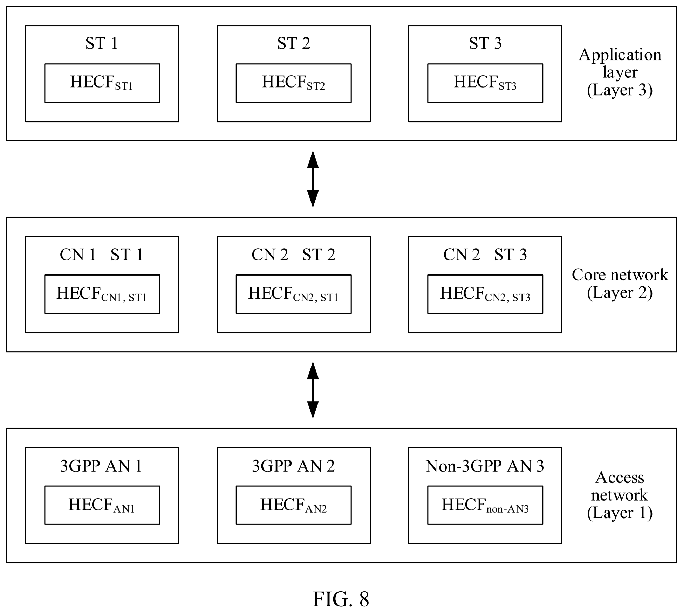

Refer to a diagram of domain division shown in FIG. 8. The communication network may be partitioned first based on an access network (a network architecture level (level) 1), a core network (a network architecture level 2), and an application layer (a network architecture level 3). The access network layer and the core network layer may be further partitioned based on service types (service types, STs), for example, network slice types. The access network may be further partitioned based on access network sets (an access network sites). For example, in FIG. 8, ST 1, ST 2, and ST 3 may respectively represent network slices of different types. The network slices of ST 1, ST 2, and ST 3 at the application layer may be partitioned as different domains, network slices of ST 1, ST 2, and ST 3 in the core network may be partitioned as different domains, and different access network sets in the access network may be partitioned as different domains, for example, 3GPP access network set 1 (3GPP AN 1), 3GPP access network set 2 (3GPP AN 2), and non-3GPP access network set 3 (Non-3GPP AN 3).

It should be understood that, in this embodiment of this application, partition rules for a plurality of domains may be the same or may be different, and there may be an intersection set or no intersection set between different domains. For example, if domain 0 corresponds to PLMN 0, domain 1 corresponds to network slice 1 in PLMN 0, and domain 2 corresponds to network slice 2 in PLMN 0, domain 0 may include domain 1 and domain 2.

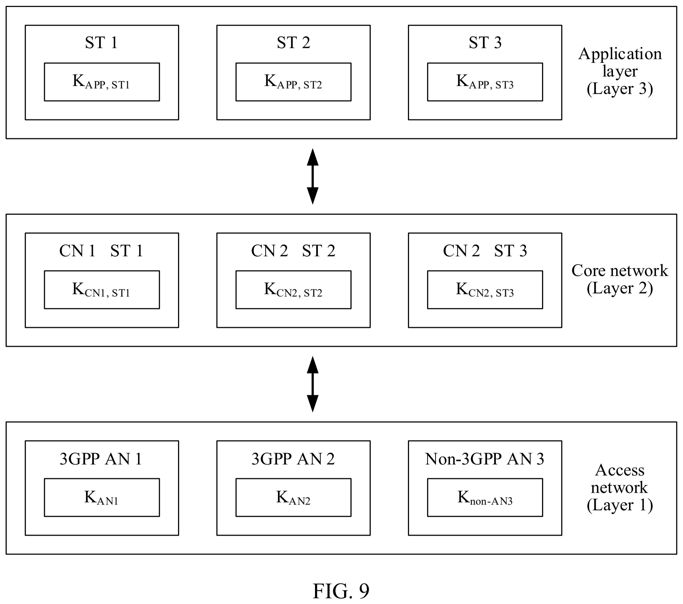

In this embodiment of this application, the homomorphic encryption key may be at a domain level, that is, each domain corresponds to one homomorphic encryption key. The domain division shown in FIG. 8 is still used as an example. Refer to a diagram of an architecture of a homomorphic encryption key shown in FIG. 9. Each domain in FIG. 8 corresponds to one homomorphic encryption key. For example, a domain corresponding to a network slice of an ST 1 at the application layer corresponds to a homomorphic encryption key $K_{APP, ST1}$, a domain of a network slice corresponding to an ST 2 at the application layer corresponds to a homomorphic encryption key $K_{APP, ST2}$, and a domain of a network slice corresponding to an ST 3 at the application layer corresponds to a homomorphic encryption key $K_{APP, ST3}$, ..., and a domain corresponding to the access network Non-3GPP AN 3 corresponds to a homomorphic encryption key $K_{non-AN3}$. A homomorphic decryption key of each domain may be stored only in a control network element corresponding to the domain.

A homomorphic encryption key corresponding to each domain and a homomorphic decryption key corresponding to each domain may be derived by a control network element corresponding to the domain, or may be derived by a key management party, or may be derived collaboratively by both a control network element and a key management party. The key management party may be a KMC, or may be a network element or infrastructure like an ARPF, an AMF, or the like in a communication network.

The first domain is still used as an example. The first control network element may input a public parameter (for example, the foregoing security parameter) used for key derivation and a public reference value into a key generator, to derive a first homomorphic encryption key and a first homomorphic decryption key corresponding to the first domain, and may further derive a set of temporary homomorphic computation keys corresponding to the first domain. The security parameter may be determined by the first control network element, and the public reference value may be a common reference string (common reference string, CRS) that may be provided by a key management party. The key generator may be an algorithm, a function, an algorithm procedure, or the like for key derivation.

In some implementations, key generators corresponding to different homomorphic encryption algorithms may be different. In this embodiment of this application, the key generator may be determined based on a homomorphic encryption algorithm supported by a homomorphic enabling unit in the first domain. For example, the homomorphic enabling unit in the first domain or the homomorphic enabling unit serving as a homomorphic encryption party in the first domain supports a homomorphic encryption algorithm 1, and the first control network element may select a key generator applicable to the homomorphic encryption algorithm 1 to perform key derivation.

S602: The first control network element sends the first homomorphic encryption key to M first homomorphic enabling units belonging to the first domain, and correspondingly, the M first homomorphic enabling units receive the first homomorphic encryption key. M is an integer greater than or equal to 1.

In a possible implementation, the M first homomorphic enabling units belonging to the first domain may be all homomorphic enabling units in the first domain, or one or more homomorphic enabling units serving as a homomorphic encryption party (for example, supporting homomorphic encryption) in the first domain. After obtaining the first homomorphic encryption key corresponding to the first domain, the first control network element may send the first homomorphic encryption key to all the homomorphic enabling units in the first domain or the one or more homomorphic enabling units serving as a homomorphic encryption party in the first domain.

In another possible implementation, the M first homomorphic enabling units belonging to the first domain may further be one or more homomorphic enabling units serving as a homomorphic encryption party of a homomorphic task (for example, the first homomorphic task) in the first domain. After the homomorphic task (for example, the first homomorphic task) is scheduled (or orchestrated) in the first domain, the first control network element may further send the first homomorphic encryption key to the one or more homomorphic enabling units serving as a homomorphic encryption party of the homomorphic task in the first domain.

S603: The first control network element sends a first homomorphic computation key to N second homomorphic enabling units belonging to the first domain, and correspondingly, the N second homomorphic enabling units receive the first homomorphic computation key.

N is an integer greater than or equal to 1, and the first homomorphic computation key may be determined based on the first homomorphic encryption key and/or a first homomorphic decryption key corresponding to the first homomorphic encryption key.

In some implementations, after the homomorphic task (for example, the first homomorphic task) is scheduled (or orchestrated) in the first domain, the first control network element may send the first homomorphic computation key to the N second homomorphic enabling units serving as a homomorphic computation party of the homomorphic task in the first domain. For example, the first control network element may send the first homomorphic computation key to the N second homomorphic computation units serving as a homomorphic computation party of the homomorphic task in the first domain after completing the configuration of a homomorphic task role (for example, a homomorphic computation party, a homomorphic encryption party, or the like) of the homomorphic enabling unit participating in the homomorphic task in the first domain and establishing the homomorphic task.

In this embodiment of this application, one homomorphic task corresponds to one set of homomorphic computation keys, and the set of homomorphic computation keys corresponding to one homomorphic task may include one or more keys used for homomorphic computation. For example, the homomorphic computation key corresponding to the first homomorphic task may include a BSK and a KSK. For functions of the BSK and the KSK, refer to the foregoing descriptions of homomorphic encryption. Details are not described again.

The homomorphic computation key corresponding to the homomorphic task may be determined based on K homomorphic encryption keys and/or K homomorphic decryption keys corresponding to K domains in which participants (for example, a homomorphic encryption party, a homomorphic computation party, and the like) of the homomorphic task are distributed, where K is an integer greater than or equal to 1.

For example, the homomorphic task is the first homomorphic task, K is equal to 1, and the participants of the first homomorphic task are distributed in the first domain. The first homomorphic computation key corresponding to the first homomorphic task may be determined by the first control network element and/or the key management party based on the first homomorphic encryption key and/or the first homomorphic decryption key corresponding to the first domain. For example, a set of temporary homomorphic computation keys that are derived by the first control network element when the first control network element derives the first homomorphic encryption key and the first homomorphic decryption key by using a key generator and that correspond to the first domain may be used as the first homomorphic computation key corresponding to the first homomorphic task.

For example, the homomorphic task is the first homomorphic task, K is greater than 1, and participants of the first homomorphic task are distributed in K domains including the first domain. The first homomorphic computation key corresponding to the first homomorphic task may be determined by the key management party based on K homomorphic encryption keys and/or K homomorphic decryption keys corresponding to the K domains.

In an example, a control network element corresponding to each of the K domains may send a key parameter that is based on the domain to the key management party, where the key parameter of each domain is determined based on a homomorphic encryption key and/or a homomorphic decryption key corresponding to the domain. The key management party derives, based on the key parameters of the K domains, the first homomorphic computation key corresponding to the first homomorphic task, and may send the first homomorphic computation key to K control network elements corresponding to the K domains, so that the K control network elements deliver the first homomorphic computation key to the homomorphic computation parties participating in the first homomorphic task in the K domains.

The following provides an example in which a key management party (using a KMC as an example) derives, based on key parameters of K domains, a first homomorphic computation key corresponding to a first homomorphic task, where $i = 0, 1, 2, ...,$ and K, and an HECF network element is a control network element.

In a derivation phase of a homomorphic encryption key and a homomorphic decryption key:

(0) The HECF control network element of the domain $i$ first derives a homomorphic decryption key (secret key) $K_{dec} = (1, s_i) \in R_q^2$, where $s_i$ is a component of the homomorphic decryption key in the domain $i$, and may be generated based on a secret parameter like a random parameter, a key, or the like of the domain by using a key derivation function. $R_q^2$ indicates a polynomial ring (ring) in which a ciphertext modulus is $q$, and a superscript 2 indicates a dimension.

(1) The KMC generates common reference values and delivers the common reference values to HECF network elements in all domains. The common reference values are $a$ and $g$, where $a \in R_q^d$ (a random polynomial vector), $g \in Z^d$ is a gadget vector, and $Z^d$ is an integer set with a dimension of $d$.

(2) The HECF network element in the domain $i$ generates a public key $b_i$ and a temporary homomorphic computation key $D_i$ of the domain $i$ based on the common reference values and the homomorphic decryption key $s_i$, and sends the public key and the temporary homomorphic computation key to the KMC.

A method for generating the public key (homomorphic encryption key) $b_i$ in the domain $i$ is not limited. The following is merely an example.

$$b_i = (-a \cdot s_i + e_i) \in R_q^d$$ ; and $e_i$ is random "noise" introduced for ciphertext security.

A method for generating the temporary homomorphic evaluation key $D_i = [d_{i,0} \,|\, d_{i,1} \,|\, d_{i,2}] \in R_q^{d \times 3}$ in the domain $i$ is not limited. The following is merely an example. $r_i$ is a randomly distributed small polynomial sampling. $d_{i,1} \leftarrow U(R_q^d)$, and $d_{i,1}$ is sampling from uniform distribution on $R_q^d$.

$$d_{i,0} = -s_i \cdot d_{i,1} + r_i \cdot g + e_{i1} \in R_q^d;$$

and the temporary homomorphic evaluation key component $d_{i,0}$ is computed based on a homomorphic decryption key component $s_i$, a public parameter $g$, a newly introduced random quantity $r_i$, and a temporary homomorphic evaluation key component $d_{i,1}$.

$$d_{i,2} = r_i \cdot a + s_i \cdot g + e_{i2} \in R_q^d;$$

and the temporary homomorphic evaluation key component $d_{i,2}$ is computed based on a homomorphic decryption key component $s_i$, a public parameter $a$ and $g$, and a newly introduced random quantity $r_i$.

In a derivation phase of K-party homomorphic computation keys (for example, the first homomorphic computation key of the first homomorphic task) corresponding to K domains:

(3) The HECF network element in the domain $i$ may send a public key $b_i$ and a temporary homomorphic computation key $D_i$ in the domain $i$ to the KMC. The homomorphic task relates to homomorphic encryption and decryption keys of the K domains. The KMC generates the K-party homomorphic computation keys (KSK and BSK) based on K public keys and temporary homomorphic computation keys, and delivers the keys to a plurality of homomorphic computation parties (where the computation party only needs to have a computation capability, and a quantity of computation parties does not need to be limited).

A method for generating a K-party key switching key (key switching key, KSK) KSK = $\{K_{i,j}\}1{\leq}i,j{\leq}k$, is not limited. The following is merely an example.

$$K_{i,j} = \begin{bmatrix} k_{i,j,0} \,|\, k_{i,j,1} \,|\, k_{i,j,2} \end{bmatrix} \in R_q^{d\times 3};$$

$$\begin{bmatrix} k_{i,j,0} \,|\, k_{i,j,1} \end{bmatrix} = \begin{bmatrix} g^{-1}(b_j[1]) \\ \vdots \\ g^{-1}(b_j[d]) \end{bmatrix} \cdot \begin{bmatrix} d_{i,0} \,|\, d_{i,1} \end{bmatrix},$$

and $k_{i,j,2} = d_{i,2}$.

A method for generating a K-party bootstrapping key (bootstrapping key, BSK) is not limited. The following is merely an example.

$$d_{i,j} = r_{i,j} \cdot a + s_{i,j} \cdot g + e_{i,j}$$

A K-party bootstrapping key component $d_{i,j}$ is computed based on a homomorphic decryption key component $s_{i,j}$, public parameters $a$ and $g$, a newly introduced random quantity $r_{i,j}$, and a random noise component $e_{i,j}$.

The K-party bootstrapping key component $F_{i,j} = [f_0, f_1]$ is sampled $f_1$ from random uniform distribution, and then is computed according to the following formula $f_0$.

$$f_0 = -z_i \cdot f_1 + r_{i,j} \cdot g + e_{i,j}$$

A K-party bootstrapping key component $F_{i,j}$ is computed based on a new homomorphic encryption key component $z_i$, a public parameter $g$, a newly introduced random quantity $r_{i,j}$, and a random noise component $e_{i,j}$.

It should be understood that, in this embodiment of this application, the homomorphic encryption and decryption keys (including the homomorphic encryption key and the homomorphic decryption key) may be decoupled from the homomorphic task, and lifecycles of the homomorphic encryption and decryption keys and the homomorphic computation key may be different. For example, a lifecycle of a homomorphic computation key lasts only in a period of a homomorphic task corresponding to the homomorphic computation key. After the homomorphic task ends, the homomorphic computation key corresponding to the homomorphic task needs to be destroyed (or invalidated). For example, after the first homomorphic task ends, the homomorphic computation party participating in the first homomorphic task deletes the homomorphic computation key corresponding to the first homomorphic task. However, homomorphic encryption and decryption keys in a sub-domain are decoupled from a homomorphic task. After the homomorphic task ends, the homomorphic encryption and decryption keys in the sub-domain do not need to be destroyed (or invalidated), and may continue to be used. For example, homomorphic encryption and decryption keys in a specific domain (for example, the first domain) may be derived after a control network element (for example, the first control network element) in the domain determines to establish a secure channel to a key management party. All homomorphic encryption of the domain is performed by using a same derived homomorphic encryption key. After a specific homomorphic task ends, the homomorphic encryption and decryption keys in the domain do not need to be destroyed (or invalidated), and may continue to be used.

In some implementations, a periodic update or triggered update may be selected for the homomorphic encryption and decryption keys.

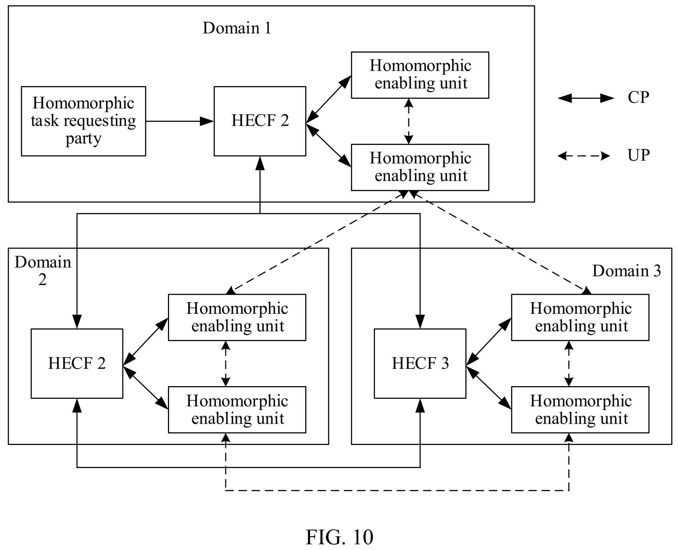

Refer to FIG. 10. In this embodiment of this application, each control network element (for example, a control network element in FIG. 10 is an HECF network element) may be responsible for homomorphic task management, homomorphic capability management, key management, interface (for example, HECF interface) management, ciphertext data storage management, and the like in a domain corresponding to the control network element. A homomorphic enabling unit may perform exchange with a control network element in a domain in which the homomorphic enabling unit is located through a control plane (control plane, CP) interface, for example, report homomorphic capability information to the control network element, receive task configuration information from the control network element, and the like. The homomorphic task requesting party may send a homomorphic task request to a control network element (for example, an HECF network element 1) in a domain (for example, a domain 1) in which the homomorphic task requesting party is located. The control network element in the domain may parse the homomorphic task request, and may exchange, through a control plane interface (for example, an HECF interface), a homomorphic capability profile of a homomorphic enabling unit in a managed domain with a control network element in another domain. In addition, when participants of the homomorphic task relate to homomorphic enabling units in other domains (for example, a domain 2 and a domain 3), homomorphic task sub-requirements may be sent to control network elements in the other domains. Transmission of data, a ciphertext, or the like of a user plane (user plane, UP) may be performed between different homomorphic enabling units based on a configuration of a homomorphic task.

In some implementations, the participant of the homomorphic task may include one or more of a homomorphic encryption party, a homomorphic computation party, a homomorphic decryption party, a data provider, a data user, a key management party, and the like of the homomorphic task.

In the following descriptions, for example, the participants of the first homomorphic task are distributed in K domains (a domain 1, a domain 2, and a domain 3), an HECF network element (the first control network element) receiving the first homomorphic task request splits the first homomorphic task request into a plurality of first homomorphic task sub-requirements, and forwards the first homomorphic task sub-requirements across domains (to the domain 2 and the domain 3), and HECF network elements (the control network elements) in the K domains schedule (or orchestrate) the first homomorphic task.

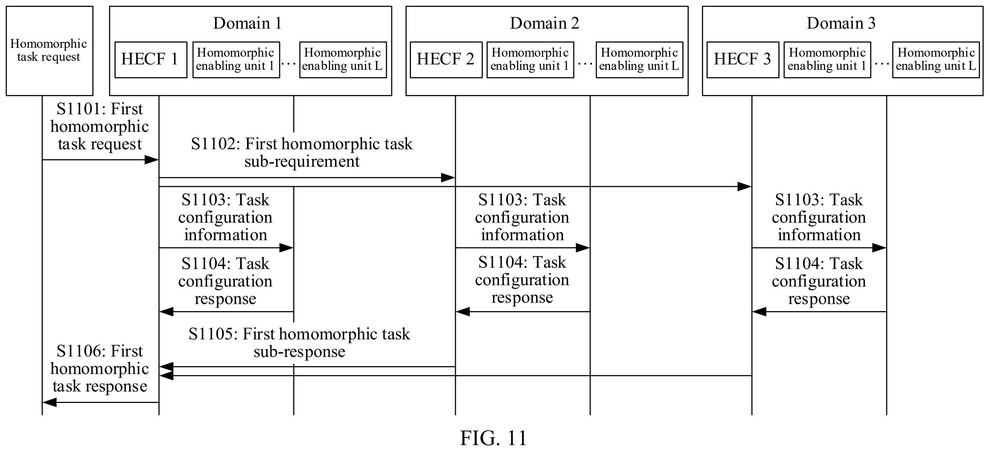

FIG. 11 is a diagram of a possible homomorphic task management process according to an embodiment of this application. The process includes the following steps.

S1101: A homomorphic task requesting party sends a first homomorphic task request to an HECF network element 1 (a first control network element), and the HECF network element 1 receives the first homomorphic task request.

S1102: The HECF network element 1 separately sends a first homomorphic task sub-requirement to an HECF network element 2 and an HECF network element 3.

In this embodiment of this application, the homomorphic task request may include one or more of a homomorphic task output type, a homomorphic task type, a homomorphic task quality requirement, a data user parameter, a quantity of data users, a quantity of data providers, a data provider parameter, and the like. After receiving the first homomorphic task request, the HECF network element 1 may determine, based on the first homomorphic task request, a domain in which the participants of the first homomorphic task are distributed.

In an example, the HECF network element 1 may obtain first information of F domains, where F may be an integer greater than or equal to (K-1), and the F domains may be other domains in a PLMN in which the domain 1 is located, or other domains in which a network slice of a same type as the domain 1 is located. This is not limited in this application. The first information of each domain may include homomorphic capability information of at least one homomorphic enabling unit (L homomorphic enabling units are used as an example in FIG. 10) in the domain. The homomorphic capability information of each homomorphic enabling unit may include one or more of an identifier, a type, a homomorphic encryption capability level, a homomorphic encryption security level, a homomorphic encryption enabling identifier, a homomorphic decryption enabling identifier, a homomorphic computation enabling identifier, an identifier of a supported homomorphic encryption algorithm, an identifier of a supported homomorphic computation algorithm, and the like of the homomorphic enabling unit. The first information of each domain may be sent by an HECF network element corresponding to the domain to the HECF network element 1.

After receiving the first homomorphic task request, the HECF network element 1 obtains, through parsing, identifiers of a plurality of data providers included in the first homomorphic task. The HECF network element 1 learns of, based on the first information in the domain 1 and the first information in the F domains, homomorphic enabling units in the domain 1, the domain 2, and the domain 3 respectively corresponding to the plurality of data providers. In this case, the HECF network element 1 may separately send the first homomorphic task sub-requirements to the HECF network element 2 corresponding to the domain 2 and the HECF network element 3 corresponding to the domain 3, to indicate the HECF network element 2 and the HECF network element 3 to respectively configure the first homomorphic task in the domain 2 and the domain 3.

Information included in the first homomorphic task sub-requirement may be the same as or partially the same as or different from that in the first homomorphic task request, provided that an HECF network element receiving the first homomorphic task sub-requirement can be indicated to configure the first homomorphic task for a participant of the first homomorphic task in a domain corresponding to the HECF network element. For example, the first homomorphic task sub-requirement sent by the HECF network element 1 to the HECF network element 2 corresponding to the domain 2 may include only a parameter of a data provider of the first homomorphic task in the domain 2, and does not include parameters of data providers of the first homomorphic task in the domain 1 and the domain 3.

S1103: The HECF network element 1 sends task configuration information to at least one third homomorphic enabling unit participating in the first homomorphic task in the domain 1, the HECF 2 sends task configuration information to at least one third homomorphic enabling unit participating in the first homomorphic task in the domain 2, and the HECF 3 sends task configuration information to at least one third homomorphic enabling unit participating in the first homomorphic task in the domain 3.

After receiving the first homomorphic task request (or the first homomorphic task sub-requirement), the HECF network element 1, the HECF network element 2, or the HECF network element 3 may parse the first homomorphic task request (or the first homomorphic task sub-requirement), perform first homomorphic task scheduling (or orchestration), and send the task configuration information to the at least one third homomorphic enabling unit participating in the first homomorphic task in the corresponding domain, where the task configuration information includes a homomorphic task role of the at least one third homomorphic enabling unit.

For example, the HECF network element 1 determines, based on the first homomorphic task request and homomorphic capability information of L fourth homomorphic enabling units belonging to the domain 1, homomorphic task roles of Q third homomorphic enabling units participating in the first homomorphic task in the first domain, where Q is an integer greater than or equal to 1, and L is an integer greater than or equal to Q.

The HECF network element 1 may parse the first homomorphic task request, for example, obtain a parameter (for example, a quantity, an identifier, or the like) of a data provider, and select, for the data provider based on the homomorphic capability information of the L fourth homomorphic enabling units in the domain 1, for example, homomorphic encryption enabling information and homomorphic computation enabling information, a corresponding quantity of homomorphic enabling units whose homomorphic encryption enabling is true (true) as a homomorphic encryption party, and select a homomorphic enabling unit whose homomorphic encryption enabling is true as a homomorphic computation party, to compute an encrypted ciphertext, and the like. After determining the homomorphic task roles of the Q third homomorphic enabling units participating in the first homomorphic task in the first domain, the HECF network element 1 may send task configuration information to the Q third homomorphic enabling units participating in the first homomorphic task in the domain 1, where the task configuration information includes the homomorphic task roles (for example, a homomorphic computation party, a homomorphic encryption party, and the like) of the Q third homomorphic enabling units.

S1104: The HECF network element 1 receives a task configuration response sent by the at least one third homomorphic enabling unit participating in the first homomorphic task in the domain 1, the HECF network element 2 receives a task configuration response sent by the at least one third homomorphic enabling unit participating in the first homomorphic task in the domain 2, and the HECF network element 3 receives a task configuration response sent by the at least one third homomorphic enabling unit participating in the first homomorphic task in the domain 3.

S1105: The HECF network element 2 sends a first homomorphic task sub-response to the HECF network element 1, and the HECF network element 2 sends a first homomorphic task sub-response to the HECF network element 1.

S1106: The HECF network element 1 sends a first homomorphic task response to the homomorphic task requesting party.

After receiving the task configuration information, the third homomorphic enabling unit may reply with a task configuration response to the HECF network element that sends the task configuration information, where the task configuration response may indicate that the third homomorphic enabling unit receives the task configuration information. After receiving the task configuration response of the at least one third homomorphic enabling unit in the corresponding domain, the HECF network element 2 or the HECF network element 3 may send a first homomorphic task sub-response to the HECF network element 1, to notify the HECF network element 1 that configuration of the first homomorphic task in the domain 2 or the domain 3 is completed. After receiving the task configuration response of the at least one third homomorphic enabling unit in the domain 1, and the first homomorphic task sub-response from the HECF network element 2 and the HECF network element 3, the HECF network element 1 may reply with the first homomorphic task response to the homomorphic task requesting party, to notify the homomorphic task requesting party that the configuration of the first homomorphic task is completed.

It should be understood that, in some implementations, the first homomorphic task may alternatively relate to only one domain, for example, relate to only the domain 1 corresponding to the HECF network element 1 receiving the first homomorphic task request. In this case, only the HECF network element 1 schedules the first homomorphic task in the domain 1.

The capability information of the L homomorphic enabling units in each HECF network element may be actively reported by a homomorphic enabling unit to the HECF network element in a domain to which the homomorphic enabling unit belongs, or may be reported by a homomorphic enabling unit in response to a homomorphic capability information reporting request of the HECF network element. This is not limited in this application. For each homomorphic enabling unit in a corresponding domain, the HECF network element may generate or update, based on obtained homomorphic capability information of the homomorphic enabling unit, a homomorphic capability profile of the homomorphic enabling unit, where the homomorphic capability profile of the homomorphic enabling unit includes the homomorphic capability information of the homomorphic enabling unit. For example, the domain 1 corresponding to the HECF network element 1 includes a fourth homomorphic enabling unit. The HECF network element 1 may obtain homomorphic capability information of the fourth homomorphic enabling unit, and generate or update, based on the homomorphic capability information, a homomorphic capability profile of the fourth homomorphic enabling unit.

According to the homomorphic task management process shown in FIG. 11, when participants of the homomorphic task are not only related to a domain in which an HECF network element receiving a homomorphic task request is located, but also related to another domain, the HECF network element receiving the homomorphic task request may send, to an HECF network element in the another domain, a homomorphic task sub-requirement obtained by splitting the homomorphic task request, to implement cross-domain homomorphic task configuration (or scheduling), and meet a requirement of a user for implementing a cross-domain homomorphic task.

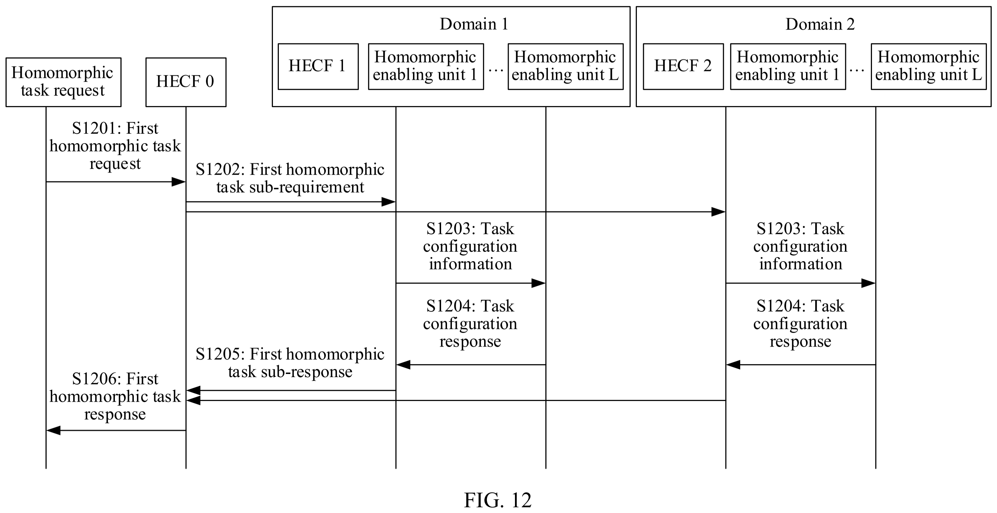

FIG. 12 is a diagram of another possible homomorphic task management process according to an embodiment of this application. The process includes the following steps.

S1201: A homomorphic task requesting party sends a first homomorphic task request to an HECF network element 0 (that is, HECF 0), and the HECF network element 0 receives the first homomorphic task request.

S1202: The HECF network element 0 separately sends a first homomorphic task sub-requirement to an HECF network element 1 (that is, HECF 1) and an HECF network element 2 (that is, HECF 2).

S1203: The HECF 1 sends task configuration information to at least one third homomorphic enabling unit participating in the first homomorphic task in a domain 1, and the HECF 2 sends task configuration information to at least one third homomorphic enabling unit participating in the first homomorphic task in a domain 2.

S1204: The HECF network element 1 receives a task configuration response sent by the at least one third homomorphic enabling unit participating in the first homomorphic task in the domain 1, and the HECF network element 2 receives a task configuration response sent by the at least one third homomorphic enabling unit participating in the first homomorphic task in the domain 2.

S1205: The HECF network element 1 sends a first homomorphic task sub-response to the HECF network element 0, and the HECF network element 2 sends a first homomorphic task sub-response to the HECF network element 0.

S1206: The HECF network element 0 sends a first homomorphic task response to the homomorphic task requesting party.

Different from the homomorphic task management process shown in FIG. 11, in the homomorphic task management process shown in FIG. 12, the HECF network element 0 receiving the first homomorphic task request may not directly send task configuration information to the homomorphic enabling unit, or schedule the homomorphic enabling unit. In an example, domain 0 corresponding to HECF network element 0 may include domain 1 corresponding to the HECF network element 1 and the domain 1 corresponding to the HECF network element 2. For example: domain 0 corresponds to PLMN 0, domain 1 corresponds to network slice 1 in PLMN 0, and domain 2 corresponds to a network slice 2 in PLMN 1. In this case, domain 0 may include domain 1 and domain 2. After receiving the first homomorphic task request, the HECF network element 0 may split the first homomorphic task request into a plurality of first homomorphic task sub-requirements, and HECF network elements (for example, the HECF network element 1 and the HECF network element 2) corresponding to the plurality of domains (for example, domain 1 and domain 2) included in domain 0 send the task configuration information to the homomorphic enabling unit.

A principle of the homomorphic task management process shown in FIG. 12 is similar to that of the homomorphic task management process shown in FIG. 11. For an implementation of S1201 to S1206, refer to an implementation of S1101 to S1106. Details are not described again.

According to the homomorphic task management process shown in FIG. 12, when participants of the homomorphic task are distributed in another domain other than the domain in which the HECF network element receiving the homomorphic task request is located, the HECF network element receiving the homomorphic task request may send, to an HECF network element in the another domain, the homomorphic task sub-requirement obtained by splitting the homomorphic task request, to implement cross-domain homomorphic task configuration (or scheduling), and meet a requirement of a user for implementing a cross-domain homomorphic task.

In this embodiment of this application, homomorphic decryption may be implemented by an HECF network element (that is, a control network element). If all homomorphic participants in a homomorphic task are located in one domain, the homomorphic decryption may be performed by HECF network elements in the domain.

If homomorphic encryption parties of a homomorphic task cross K domains (where K>1), HECF network elements in the domains in which K homomorphic encryption parties are located may first separately decrypt a ciphertext, and then a data user sums up decrypted data from the K HECF network elements to obtain a final decryption result.

Alternatively, if homomorphic encryption parties of a homomorphic task cross K domains (where K>1), an HECF network element in a domain in which a data user is located may first apply to HECF network elements in domains in which the homomorphic encryption parties are located for decryption keys (for example, homomorphic decryption keys) in the domains in which the encryption parties are located, and then the HECF network element in the domain in which the data user is located performs joint decryption based on the decryption keys (decryption keys of the K domains).

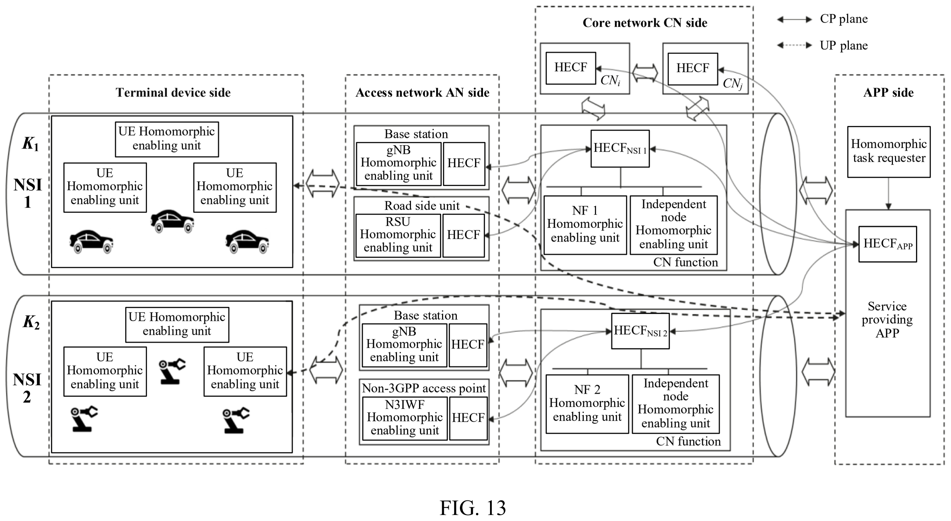

FIG. 13 is a diagram of a cross-domain homomorphic encryption task according to an embodiment of this application. Data providers of the homomorphic task may be from an APP-level slice 1 (slice 1) and slice (slice) 2. Slice 1 and slice 2 correspond to two different domains, and are different network slice instances (network slice instances, NSIs), for example, NSI 1 and NSI 2. A homomorphic encryption party may be a homomorphic enabling unit on a terminal device (for example, UE) side, for example, an APP of the UE. A homomorphic encryption key of slice 1 is $K_{APP, slice1}$ (represented by $K_1$ in FIG. 13), and a homomorphic encryption key of slice 2 is $K_{APP, slice2}$ (represented by $K_2$ in FIG. 13). A homomorphic computation party may be an APP (provider APP) that provides a service on a network side, for example, an HECF (for example, $HECF_{APP}$) network element in the APP that provides the service. The homomorphic computation party may be a terminal device, or a network element or an entity in an access network (for example, a base station, a road side unit, a non-3GPP access point, or the like) or in a core network (for example, a core network function network element (network function, NF), an independent node, or the like). Regardless of a quantity of homomorphic encryption parties in a homomorphic encryption task, the quantity of homomorphic encryption keys in the homomorphic encryption task depends only on a quantity of domains.

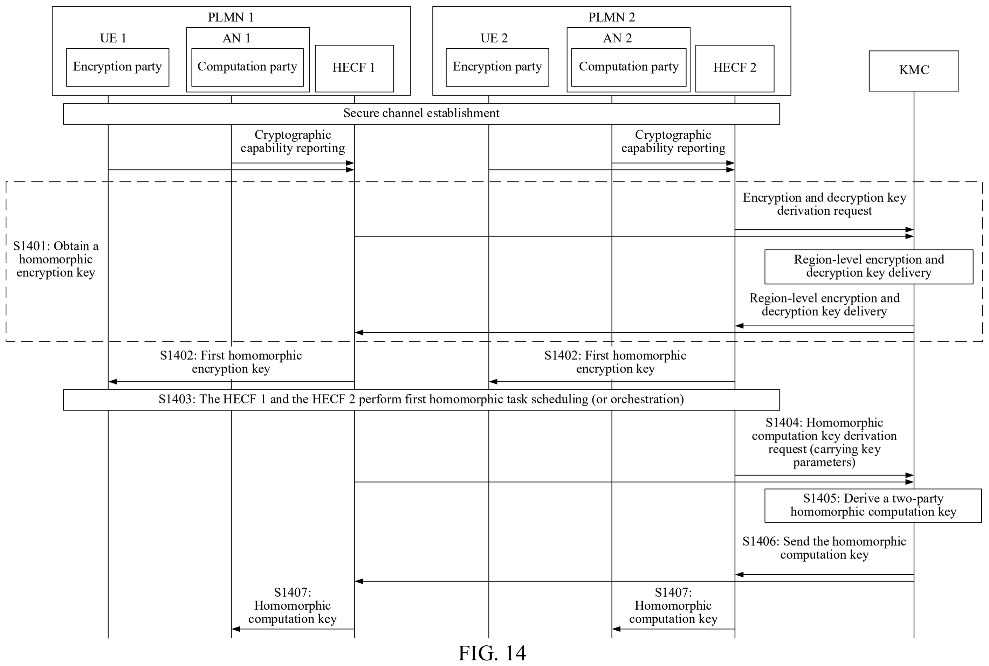

In the following descriptions, for example, domains are based on PLMNs, participants in a first homomorphic task belong to a first domain "PLMN 1" and a second domain "PLMN 2", and control network elements corresponding to PLMN 1 and PLMN 2 are respectively a first control network element "HECF network element 1" and a second control network element "HECF network element 2". FIG. 14 is a diagram of a domain-based key management procedure according to an embodiment of this application.

S1401: An HECF network element 1 obtains a first homomorphic encryption key corresponding to PLMN 1, and an HECF network element 2 obtains a second homomorphic encryption key corresponding to PLMN 2.

For example, the first homomorphic encryption key corresponding to PLMN 1 and the second homomorphic encryption key corresponding to PLMN 2 are derived by a KMC. For PLMN 1, a homomorphic enabling unit (for example, a network element in an or a CN, UE, or the like) in PLMN 1 may report a cryptographic capability to the HECF network element 1 in the domain, for example, a homomorphic encryption capability, like a homomorphic encryption security level, or an identifier of a supported homomorphic encryption algorithm. After receiving the cryptographic capability sent by the homomorphic enabling unit in PLMN 1, the HECF network element 1 may send a homomorphic encryption key and homomorphic decryption key derivation request to the KMC, and may include an identifier of a homomorphic encryption algorithm in the derivation request. The identifier of the homomorphic encryption algorithm carried in the derivation request may be determined based on an identifier of a homomorphic encryption algorithm supported by the homomorphic enabling unit in PLMN 1. For example, all homomorphic enabling units in PLMN 1 support a homomorphic encryption algorithm 1, and the HECF 1 may include an identifier of the homomorphic encryption algorithm 1 in a homomorphic encryption key and homomorphic decryption key derivation request sent to the KMC. Alternatively, if a homomorphic enabling unit that exceeds a specified proportion threshold in PLMN 1 supports a homomorphic encryption algorithm 1, the HECF 1 may alternatively include an identifier of the homomorphic encryption algorithm 1 in a homomorphic encryption key and homomorphic decryption key derivation request sent to the KMC, and may determine that the homomorphic enabling unit supporting the homomorphic encryption algorithm 1 in PLMN 1 can be orchestrated or scheduled as a homomorphic computation party of a homomorphic task, to ensure reliable execution of the homomorphic task.

After receiving the homomorphic encryption key and homomorphic decryption key derivation request from the HECF network element 1, the KMC may derive, based on a key generator corresponding to the identifier of the homomorphic encryption algorithm carried in the derivation request, the first homomorphic encryption key and the first homomorphic decryption key corresponding to PLMN 1, and deliver the first homomorphic encryption key and the first homomorphic decryption key to the HECF network element 1.

For an implementation in which an HECF network element 2 obtains a second homomorphic encryption key and a second homomorphic decryption key corresponding to PLMN 2, refer to the foregoing implementation in which the HECF network element 1 obtains the first homomorphic encryption key and the first homomorphic decryption key corresponding to PLMN 1. Details are not described again.

It may be understood that, before the foregoing procedure is performed, network authentication may be performed between the network element in the AN or the CN in the PLMN (for example, PLMN 1 and PLMN 2), the HECF, and the KMC, to establish a secure channel. The UE may also access a network (for example, the AN and/or the CN) and perform authentication (for example, authentication and key agreement (authentication and key agreement, AKA)) with the network, to establish a secure channel.

S1402: The HECF network element 1 sends the first homomorphic encryption key to a first homomorphic enabling unit belonging to PLMN 1, and the HECF network element 2 sends the second homomorphic encryption key to a first homomorphic enabling unit belonging to PLMN 2.

S1403: The HECF network element 1 and the HECF network element 2 perform first homomorphic task scheduling (or orchestration).

For example, an application layer APP, as the homomorphic task requesting party, sends the first homomorphic task request to request a computation result of data related to UE 1 in PLMN 1 and UE 2 in PLMN 2. After receiving the first homomorphic task request (or the first homomorphic task sub-requirement) corresponding to the first homomorphic task, HECF network elements (for example, the HECF network element 1 and the HECF network element 2) in the communication network may perform homomorphic task scheduling (or orchestration). For example, a homomorphic enabling unit participating in the first homomorphic task is selected, where the selected homomorphic enabling unit participating in the first homomorphic task may include a homomorphic encryption party, a homomorphic computation party, and the like participating in the first homomorphic task.

S1404: The HECF network element 1 sends a homomorphic computation key derivation request to the KMC, and the HECF network element 2 sends a homomorphic computation key derivation request to the KMC.

The homomorphic computation key derivation request sent by the HECF network element 1 to the KMC may include an identifier of the first homomorphic task, a key parameter determined based on the first homomorphic encryption key and/or the first homomorphic decryption key, a public parameter used for deriving the first homomorphic encryption key and/or the first homomorphic decryption key, and the like. The key parameter determined based on the first homomorphic encryption key and/or the first homomorphic decryption key may be the first homomorphic encryption key and/or the first homomorphic decryption key, or one or more of the first homomorphic encryption key, the first homomorphic decryption key, and a first temporary homomorphic computation key, or may be a key parameter used for deriving the first homomorphic encryption key and/or the first homomorphic decryption key, or the like. For an implementation in which the HECF network element 2 sends the homomorphic computation key derivation request to the KMC, refer to an implementation implemented by the HECF network element 1. Details are not described again.

It should be understood that, if the key parameter carried in the homomorphic computation key derivation request sent by the HECF network element 1 and/or the HECF network element 2 to the KMC has been stored in the KMC, step S1404 may alternatively not be performed. For example, both the homomorphic encryption key and the homomorphic decryption key of the HECF network element 1 and the HECF network element 2 are derived by the KMC. When the KMC stores key parameters that correspond to the HECF network element 1 and the HECF network element 2 and that are used for deriving the homomorphic computation key, step S1404 may alternatively not be performed.

S1405: The KMC derives a two-party homomorphic computation key of the first homomorphic task.

After receiving the key parameter from the HECF network element 1 and the key parameter from the HECF network element 2, the KMC may derive, based on the key parameter of the HECF network element 1 and the key parameter from the HECF network element 2, the two-party homomorphic computation key corresponding to PLMN 1 and PLMN 2.

S1406: The KMC sends the homomorphic computation key to the HECF network element 1 and the HECF network element 2.

S1407: The HECF network element 1 sends the homomorphic computation key to the second homomorphic enabling unit serving as a homomorphic computation party in PLMN 1, and the HECF network element 2 sends the homomorphic computation key to the second homomorphic enabling unit serving as a homomorphic computation party in PLMN 2.

It should be understood that, the foregoing descriptions are provided by using an example in which the cryptographic capability reported by the homomorphic enabling unit (for example, the network element in the AN or the CN, the UE, or the like) includes a homomorphic encryption capability, for example, a homomorphic encryption security level, an identifier of a supported homomorphic encryption algorithm, and the like; and the HECF network element obtains the homomorphic encryption key and the homomorphic decryption key. It may be understood that, the foregoing cryptographic capability may further include a symmetric/asymmetric cryptographic capability that does not include a homomorphic feature, for example, whether corresponding/asymmetric encryption is supported. The HECF network element may further obtain symmetric/asymmetric encryption keys and decryption keys that do not include a homomorphic feature, for example, derive domain-level symmetric/asymmetric encryption keys and decryption keys by using the KMC, and send the domain-level symmetric/asymmetric encryption keys to the encryption party. In this case, if a symmetric/asymmetric ciphertext is received by a computation party (for example, a homomorphic computation party), the symmetric ciphertext may be first switched into a homomorphic ciphertext, and then homomorphic computation is performed. In addition, the computed homomorphic ciphertext may be sent to a decryption party (for example, an HECF network element), or the computed homomorphic ciphertext is switched into a symmetric/asymmetric ciphertext, which is then sent to the decryption party. This is not limited in this application.

According to the scheme of this application, homomorphic task and key management may be performed based on domains. Each domain corresponds to one homomorphic encryption key, and users in each domain correspond to a same homomorphic encryption key. The homomorphic encryption key may be decoupled from a user status and a specific homomorphic task, so that a same homomorphic ciphertext of the users may be provided for homomorphic computation parties of different homomorphic tasks for homomorphic computation, to improve reusability of the homomorphic ciphertext of the users and facilitate transfer of the homomorphic ciphertext in different homomorphic tasks. In addition, a domain-level homomorphic encryption key rather than a user-level homomorphic encryption key (for example, each homomorphic encryption party corresponds to one homomorphic encryption key) can reduce a quantity of homomorphic encryption keys in a homomorphic task, to reduce derivation of homomorphic computation keys, reduce homomorphic computation complexity, and improve homomorphic computation efficiency.

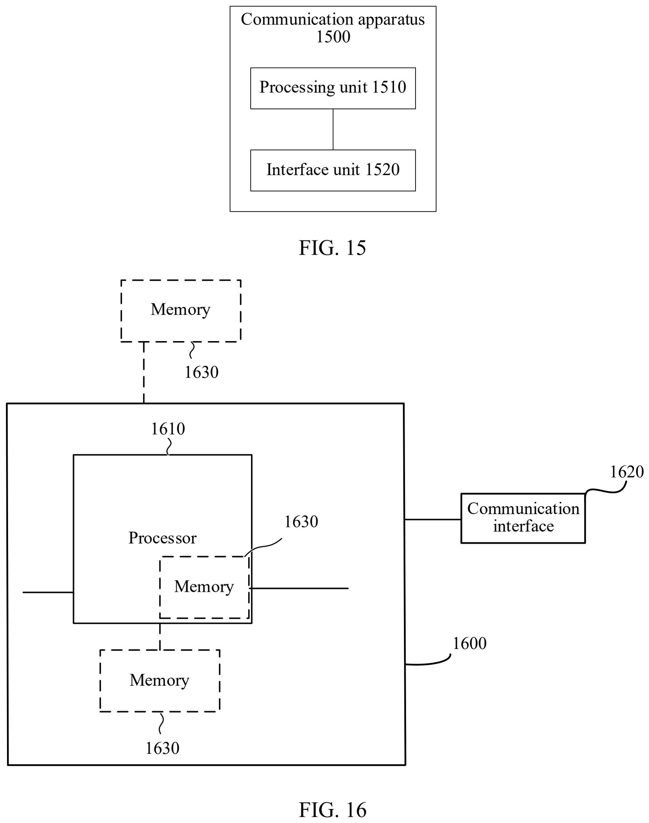

The following describes a communication apparatus provided in embodiments of this application. FIG. 15 is a diagram of a structure of a communication apparatus according to an embodiment of this application. The communication apparatus may include units or modules corresponding to all or some of steps in the foregoing method embodiments, and may be configured to perform the steps performed by the control network element (for example, the first control network element) or the key management party (for example, the KMC) in the foregoing embodiments. For details, refer to related descriptions in the foregoing method embodiments.

As shown in FIG. 15, the communication apparatus 1500 includes a processing unit 1510 and an interface unit 1520. The processing unit 1510 may be a processor or a processing circuit, and the interface unit 1520 may further be a transceiver unit or an input/output interface. The communication apparatus 1500 may be configured to implement the steps performed by the control network element or the key management party in the foregoing embodiments.

When the communication apparatus 1500 is configured to implement the steps performed by the first control network element in the foregoing embodiments,

the processing unit 1510 is configured to obtain a first homomorphic encryption key corresponding to a first domain; and

the interface unit 1520 is configured to send the first homomorphic encryption key to M first homomorphic enabling units belonging to the first domain, where M is an integer greater than or equal to 1; and send a first homomorphic computation key to N second homomorphic enabling units belonging to the first domain, where N is an integer greater than or equal to 1, and the first homomorphic computation key is determined based on the first homomorphic encryption key and/or a first homomorphic decryption key corresponding to the first homomorphic encryption key.

For another implementation, refer to related descriptions of the first control network element or the key management party in the foregoing embodiments. Details are not described herein again.

As shown in FIG. 16, this application further provides a communication apparatus 1600. The communication apparatus includes a processor 1610, and may further include a communication interface 1620. The processor 1610 and the communication interface 1620 are coupled to each other. It may be understood that, the communication interface 1620 may be a transceiver, an input/output interface, an input interface, an output interface, an interface circuit, or the like. Optionally, the communication apparatus 1600 may further include a memory 1630, configured to store instructions executed by the processor 1610, store input data required by the processor 1610 to run the instructions, or store data generated after the processor 1610 runs the instructions. The memory 1630 may be a physically independent unit, or may be coupled to the processor 1610, or the processor 1610 includes the memory 1630.

When the communication apparatus 1600 is configured to implement the steps performed by the first control network element or the key management party in the foregoing embodiments, the processor 1610 may be configured to implement a function of the processing unit 1510, and the communication interface 1620 may be configured to implement a function of the interface unit 1520.

It should be noted that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented by hardware, or may be implemented by the processor executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist in a network device or a terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedure or functions according to embodiments of this application are all or partially generated. The computer may be a general-purpose computer, a dedicated computer, a computer network, a network device, user equipment, or another programmable apparatus. The computer programs or the instructions may be stored in a computer-readable storage medium, or transmitted from one computer-readable storage medium to another computer-readable storage medium. For example, the computer programs or the instructions may be transmitted from one network device, terminal, computer, server, or data center to another network device, terminal, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise specified or there is a logic conflict, terms and/or descriptions in different embodiments are consistent and may be referenced by each other. Technical features in different embodiments may be combined to form a new embodiment based on an internal logical relationship.

In addition, it should be understood that, the term "for example" in embodiments of this application is used to represent an example, an illustration, or a description. Any embodiment or design scheme described as an "example" in this application should not be construed as being more preferable or advantageous than other embodiments or design schemes. Exactly, the term "for example" is intended to present a concept in a specific manner.

It may be understood that, various numbers in embodiments of this application are merely used for differentiation for ease of descriptions, and are not used to limit the scope of embodiments of this application. Sequence numbers of the foregoing processes do not mean an execution sequence, and the execution sequence of the processes should be determined based on functions and internal logic of the processes.

**Claims**

1. A domain-based key management method, comprising:

    obtaining, by a first control network element, a first homomorphic encryption key corresponding to a first domain;
    sending, by the first control network element, the first homomorphic encryption key to M first homomorphic enabling units belonging to the first domain, wherein M is an integer greater than or equal to 1; and
    sending, by the first control network element, a first homomorphic computation key to N second homomorphic enabling units belonging to the first domain, wherein N is an integer greater than or equal to 1, and the first homomorphic computation key is determined based on the first homomorphic encryption key and/or a first homomorphic decryption key corresponding to the first homomorphic encryption key.

2. The method according to claim 1, wherein the N second homomorphic enabling units are homomorphic computation parties participating in a first homomorphic task in the first domain; and
   the first homomorphic computation key is determined based on K homomorphic encryption keys and/or K homomorphic decryption keys corresponding to K domains, participants of the first homomorphic task are distributed in the K domains, the K domains comprise the first domain, the K homomorphic encryption keys comprise the first homomorphic encryption key, the K homomorphic decryption keys comprise the first homomorphic decryption key, and K is an integer greater than or equal to 1.

3. The method according to claim 2, wherein the K domains are obtained by partitioning based on network architecture layers and/or service type slices.

4. The method according to any one of claims 1 to 3, wherein the first domain corresponds to a core network, an access network, or an application layer;

    the first domain corresponds to a data network, a cloud server, a cloud server cluster, or an application at an application layer;
    the first domain corresponds to an access network set, wherein the access network set comprises P access network nodes or cells, and P is an integer greater than or equal to 1;
    the first domain corresponds to a public land mobile network PLMN of a core network, or one or more network elements in a PLMN of a core network; or
    the first domain corresponds to a network slice, a network slice of a core network, or a network slice of an application layer.

5. The method according to any one of claims 1 to 4, wherein obtaining, by the first control network element, the first homomorphic encryption key corresponding to the first domain comprises:

    deriving, by the first control network element, the first homomorphic encryption key and the first homomorphic decryption key corresponding to the first domain; or
    obtaining, by the first control network element from a key management party, the first homomorphic encryption key and the first homomorphic decryption key corresponding to the first domain.

6. The method according to claim 5, wherein before obtaining, by the first control network element from the key management party, the first homomorphic encryption key and the first homomorphic decryption key corresponding to the first domain, the method further comprises:
determining, by the first control network element, to establish a secure channel to the key management party.

7. The method according to any one of claims 1 to 6, wherein before sending, by the first control network element, the first homomorphic computation key to the N second homomorphic enabling units belonging to the first domain, the method further comprises:

receiving, by the first control network element, a first homomorphic task request, wherein the first homomorphic task request is used for requesting to configure the first homomorphic task; and sending, by the first control network element, task configuration information to Q third homomorphic enabling units participating in the first homomorphic task in the first domain, wherein the task configuration information comprises homomorphic task roles of the Q third homomorphic enabling units, the Q third homomorphic enabling units comprise the N second homomorphic enabling units, the N second homomorphic enabling units are the homomorphic computation parties participating in the first homomorphic task in the first domain, and Q is an integer greater than or equal to N.

8. The method according to any one of claims 1 to 6, wherein before sending, by the first control network element, the first homomorphic computation key to the N second homomorphic enabling units belonging to the first domain, the method further comprises:

receiving a first homomorphic task sub-requirement by the first control network element, wherein the first homomorphic task sub-requirement indicates to configure the first homomorphic task in the first domain; and sending, by the first control network element, task configuration information to Q third homomorphic enabling units participating in the first homomorphic task in the first domain, wherein the task configuration information comprises homomorphic task roles of the Q third homomorphic enabling units, the Q third homomorphic enabling units comprise the N second homomorphic enabling units, the N second homomorphic enabling units are the homomorphic computation parties participating in the first homomorphic task in the first domain, and Q is an integer greater than or equal to N.

9. The method according to claim 7, wherein the participants of the first homomorphic task are distributed in the K domains, the K domains comprise the first domain, and K is an integer greater than 1; and the method further comprises:
separately sending, by the first control network element, a first homomorphic task sub-requirement to (K-1) control network elements corresponding to (K-1) domains other than the first domain in the K domains, wherein the first homomorphic task sub-requirement indicates to configure the first homomorphic task in the (K-1) domains.

10. The method according to any one of claims 1 to 9, wherein the method further comprises:

sending, by the first control network element, a key parameter of the first domain to the key management party, wherein the key parameter is determined based on the first homomorphic encryption key and/or the first homomorphic decryption key corresponding to the first domain; and receiving, by the first control network element, the first homomorphic computation key from the key management party.

11. The method according to claim 7, wherein before sending, by the first control network element, the task configuration information to the Q third homomorphic enabling units participating in the first homomorphic task in the first domain, the method further comprises:
determining, by the first control network element based on the first homomorphic task request, and homomorphic capability information of L fourth homomorphic enabling units belonging to the first domain, the homomorphic task roles of the Q third homomorphic enabling units participating in the first homomorphic task in the first domain, wherein the L fourth homomorphic enabling units comprise the Q third homomorphic enabling units, and L is an integer greater than or equal to Q.

12. The method according to claim 11, wherein the method further comprises:

obtaining, by the first control network element, homomorphic capability information of any one of the L fourth homomorphic enabling units; and generating, by the first control network element based on the homomorphic capability information of the fourth homomorphic enabling unit, a homomorphic capability profile of the fourth homomorphic enabling unit.

13. The method according to claim 9, wherein the method further comprises:

receiving, by the first control network element, F pieces of first information from F second control network elements, wherein the first information from any one of the F second control network elements comprises homomorphic capability information of at least one homomorphic enabling unit belonging to a domain corresponding to the second control network element; and determining, by the first control network element based on the first homomorphic task request and the F pieces of first information, the (K-1) domains in which the participants of the homomorphic encryption task are distributed.

14. A domain-based key management method, comprising:

obtaining, by a key management party from K control network elements, key parameters of K domains participating in a first homomorphic task, wherein participants of the first homomorphic task are distributed in the K domains, the K control network elements respectively correspond to the K domains, a key parameter of any one of the K domains is determined based on a homomorphic encryption key and/or a homomorphic decryption key of the domain, and K is an integer greater than or equal to 1; determining, by the key management party based on the key parameters of the K domains, a first homomorphic computation key of the first homomorphic task; and separately sending, by the key management party, the first homomorphic computation key to the K control network elements.

15. The method according to claim 14, wherein the K domains comprise a first domain, the K control network elements comprise a first control network element corresponding to the first domain, and obtaining, by the key management party from the K control network elements, the key parameters of the K domains participating in the first homomorphic task comprises:

receiving, by the key management party from the first control network element, a key parameter of the first domain, wherein the key parameter is determined based on a first homomorphic encryption key and/or a first homomorphic decryption key corresponding to the first domain; and separately sending, by the key management party, the first homomorphic computation key to the K control network elements comprises: sending, by the key management party, the first homomorphic computation key to the first control network element.

16. The method according to claim 14 or 15, wherein the K domains comprise the first domain, the K control network elements comprise the first control network element corresponding to the first domain, and the method further comprises:

deriving, by the key management party, the first homomorphic encryption key and the first homomorphic decryption key of the first domain; and sending, by the key management party, the first homomorphic encryption key and the first homomorphic decryption key to the first control network element corresponding to the first domain.

17. The method according to claim 16, wherein obtaining, by the key management party from the K control network elements, the key parameters of the K domains participating in the first homomorphic task comprises:
determining, by the key management party, the key parameter of the first domain based on the first homomorphic encryption key and/or the first homomorphic decryption key of the first domain.

18. The method according to any one of claims 15 to 17, wherein the K domains are obtained by partitioning based on network architecture layers and/or service type slices.

19. The method according to any one of claims 15 to 18, wherein the first domain corresponds to a core network, an access network, or an application layer;

the first domain corresponds to a data network, a cloud server, a cloud server cluster, or an application at an application layer; the first domain corresponds to an access network set, wherein the access network set comprises P access network nodes or cells, and P is an integer greater than or equal to 1; the first domain corresponds to a public land mobile network PLMN of a core network, or one or more network elements in a PLMN of a core network; or the first domain corresponds to a network slice, a network slice of a core network, or a network slice of an application layer.

20. A communication apparatus, comprising an interface unit and a processing unit, wherein

the interface unit is configured to receive and send data; and the processing unit is configured to perform the method according to any one of claims 1 to 19 by using the interface unit.

21. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 19 by using a logic circuit or executing instructions.

22. A computer program product, comprising a computer program or instructions, wherein when the computer program or the instructions are executed by a processor, the method according to any one of claims 1 to 19 is implemented.

23. A chip system, wherein the chip system comprises a processor, the processor is configured to be coupled to a memory, the memory is configured to store a computer program or instructions, and when the computer program or the instructions are executed by the processor, the method according to any one of claims 1 to 19 is implemented.

24. A computer-readable storage medium, wherein the storage medium stores a computer program or instructions, and when the computer program or the instructions are executed by a processor, the method according to any one of claims 1 to 19 is implemented.

25. A domain-based key management system, wherein the system comprises a first control network element and a key management party;

the first control network element is configured to implement the method according to any one of claims 1 to 13; and
the key management party is configured to implement the method according to any one of claims 14 to 19.

Homomorphic key generation party

Key material → Key generator

→ Homomorphic encryption key: $K_{enc}$

→ Homomorphic decryption key: $K_{dec}$

→ Homomorphic evaluation key: $K_{eval}$

FIG. 1A

Homomorphic encryption party

Plaintext $m$ →

Homomorphic encryption key $K_{enc}$

Plaintext

→ Ciphertext $c$

FIG. 1B

Homomorphic decryption party

Ciphertext $c$ →

Homomorphic decryption key: $K_{dec}$

Ciphertext

→ Plaintext $m$

FIG. 1C

FIG. 1D

FIG. 2

Security
parameter $1^n$

Homomorphic
encryption key

Plaintext $m_1$

Function
$f$

Other
ciphertexts:
$C_2...C_l$

Homomorphic
computed
ciphertext $C_f$

Key
generation
HEKG

Ciphertext
$C_1$

Homomorphic
encryption
HEenc

Homomorphic
evaluation
HEeval

Homomorphic
decryption
HEdec

Plaintext
$f(m_1, ..., m_l)$

Homomorphic
computation
key

Homomorphic
decryption
key

A: Homomorphic
key generation
party

B: Homomorphic
encryption party

C: Homomorphic
computation party

D: Homomorphic
decryption party

FIG. 3

Homomorphic task 4

...

Homomorphic task 4

Homomorphic task 3

Homomorphic task 2

Homomorphic network management of a communication network

Perceive/register/manage **homomorphic capabilities** of different nodes;

**Homomorphic key management:** encryption/computation/decryption key;

**Homomorphic task management:** request/ configuration/scheduling, and the like;

**Homomorphic architecture, regional interface,** and the like;

...

**Homomorphic task 1**

C: Data user or homomorphic decryption party

Homomorphic decryption

B: Homomorphic computation party

Homomorphic computation

A: Data owner or homomorphic encryption party

Homomorphic encryption

FIG. 4

FIG. 5

EP 4 704 361 A1

30

| First control network element | First homomorphic enabling unit | Second homomorphic enabling unit |
|---|---|---|

S601: Obtain a first homomorphic encryption key corresponding to a first domain

S602: Send the first homomorphic encryption key to M first homomorphic enabling units belonging to the first domain

Establish a homomorphic task (for example, a first homomorphic task)

S603: Send a first homomorphic computation key to N second homomorphic enabling units belonging to the first domain

FIG. 6

CN

HECF [ST]

NF Homomorphic enabling unit

APP

HECF [ST]

APP Homomorphic enabling unit

Homomorphic network

AN

HECF

NF Homomorphic enabling unit

Terminal

UE Homomorphic enabling unit

FIG. 7

| ST 1 | ST 2 | ST 3 | Application layer (Layer 3) |
|---|---|---|---|
| $HECF_{ST1}$ | $HECF_{ST2}$ | $HECF_{ST3}$ | |

$\updownarrow$

| CN 1  ST 1 | CN 2  ST 2 | CN 2  ST 3 | Core network (Layer 2) |
|---|---|---|---|
| $HECF_{CN1, ST1}$ | $HECF_{CN2, ST1}$ | $HECF_{CN2, ST3}$ | |

$\updownarrow$

| 3GPP AN 1 | 3GPP AN 2 | Non-3GPP AN 3 | Access network (Layer 1) |
|---|---|---|---|
| $HECF_{AN1}$ | $HECF_{AN2}$ | $HECF_{non-AN3}$ | |

FIG. 8

| | | | |
|---|---|---|---|
| ST 1 | ST 2 | ST 3 | Application layer (Layer 3) |
| $K_{APP, ST1}$ | $K_{APP, ST2}$ | $K_{APP, ST3}$ | |

| | | | |
|---|---|---|---|
| CN 1   ST 1 | CN 2   ST 2 | CN 2   ST 3 | Core network (Layer 2) |
| $K_{CN1, ST1}$ | $K_{CN2, ST2}$ | $K_{CN2, ST3}$ | |

| | | | |
|---|---|---|---|
| 3GPP AN 1 | 3GPP AN 2 | Non-3GPP AN 3 | Access network (Layer 1) |
| $K_{AN1}$ | $K_{AN2}$ | $K_{non-AN3}$ | |

FIG. 9

FIG. 10

FIG. 11

EP 4 704 361 A1

FIG. 12

FIG. 13

FIG. 14

Communication apparatus 1500

Processing unit 1510

Interface unit 1520

## FIG. 15

Memory

1630

1610

Processor

1630

Memory

Communication interface

1620

Memory

1600

1630

## FIG. 16

## INTERNATIONAL SEARCH REPORT

| International application No. |
| --- |
| **PCT/CN2023/105423** |

**A. CLASSIFICATION OF SUBJECT MATTER**

H04L9/00(2022.01)i

According to International Patent Classification (IPC) or to both national classification and IPC

**B. FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CJFD, CNTXT, ENTXT, ENTXTC, DWPI, IEEE: 分层, 分类, 分片, 分区, 服务类型, 管理, 密钥, 区域, 同态, 同态计算, 同态加密, 同态解密, 同态评估, 同态任务, hierarchy, classification, partitioning, service type, management, key, region, homomorphic, computing, encryption, decryption, evaluation, task

**C. DOCUMENTS CONSIDERED TO BE RELEVANT**

| Category* | Citation of document, with indication, where appropriate, of the relevant passages | Relevant to claim No. |
| --- | --- | --- |
| Y | CN 111586000 A (BEIJING WUZI UNIVERSITY) 25 August 2020 (2020-08-25) description, paragraphs [0064]-[0179], and figures 1-6 | 1-25 |
| Y | CN 113543126 A (HUAWEI TECHNOLOGIES CO., LTD.) 22 October 2021 (2021-10-22) description, paragraphs [0086]-[0102], and figure 2 | 1-25 |
| A | CN 112543091 A (ENGINEERING UNIVERSITY OF PAP) 23 March 2021 (2021-03-23) entire document | 1-25 |
| A | CN 113810168 A (JDT HOLDINGS CO., LTD.) 17 December 2021 (2021-12-17) entire document | 1-25 |
| A | US 2021344479 A1 (SAMSUNG ELECTRONICS CO., LTD.) 04 November 2021 (2021-11-04) entire document | 1-25 |
| A | US 2021297232 A1 (SAMSUNG SDS CO., LTD.) 23 September 2021 (2021-09-23) entire document | 1-25 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 December 2023** | **18 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 704 361 A1

**INTERNATIONAL SEARCH REPORT**

International application No.

**PCT/CN2023/105423**

**C. DOCUMENTS CONSIDERED TO BE RELEVANT**

| Category* | Citation of document, with indication, where appropriate, of the relevant passages | Relevant to claim No. |
|---|---|---|
| A | BISWAS Ankur et al. "Implementation of Cyber Security for Enabling Data Protection Analysis and Data Protection using Robot Key Homomorphic Encryption" *Proceedings of the Sixth International Conference on I-SMAC (IoT in Social, Mobile, Analytics and Cloud) (I-SMAC-2022)*, 31 December 2022 (2022-12-31), pages 170-174 | 1-25 |
| A | 傅智宙等 (FU, Zhizhou et al.). "基于同态加密的HBase二级密文索引方法研究 (HBase Secondary Ciphertext Indexing Method Based on Homomorphic Encryption)" 信息网络安全 *(Netinfo Security)*, 30 April 2020 (2020-04-30), pages 55-64 | 1-25 |

Form PCT/ISA/210 (second sheet) (July 2022)

**INTERNATIONAL SEARCH REPORT**
Information on patent family members

| International application No. |
| --- |
| **PCT/CN2023/105423** |

| Patent document cited in search report | | | Publication date (day/month/year) | Patent family member(s) | | | Publication date (day/month/year) |
| --- | --- | --- | --- | --- | --- | --- | --- |
| CN | 111586000 | A | 25 August 2020 | None | | | |
| CN | 113543126 | A | 22 October 2021 | None | | | |
| CN | 112543091 | A | 23 March 2021 | None | | | |
| CN | 113810168 | A | 17 December 2021 | None | | | |
| US | 2021344479 | A1 | 04 November 2021 | KR | 20210135075 | A | 12 November 2021 |
| | | | | CN | 113609495 | A | 05 October 2021 |
| US | 2021297232 | A1 | 23 September 2021 | EP | 3886354 | A1 | 29 September 2021 |
| | | | | KR | 20210118717 | A | 01 October 2021 |

Form PCT/ISA/210 (patent family annex) (July 2022)